(19) **Europäisches Patentamt / European Patent Office / Office européen des brevets**

(11) **EP 3 794 238 B1**

(12) **EUROPÄISCHE PATENTSCHRIFT**

(45) Veröffentlichungstag und Bekanntmachung des Hinweises auf die Patenterteilung:
**02.02.2022 Patentblatt 2022/05**

(21) Anmeldenummer: **19729187.5**

(22) Anmeldetag: **16.05.2019**

(51) Internationale Patentklassifikation (IPC):
**F15B 1/08** (2006.01)   **F15B 21/14** (2006.01)
**F01K 27/00** (2006.01)   **F03B 13/00** (2006.01)
**H02J 15/00** (2006.01)   **F02C 6/16** (2006.01)
**F04F 1/06** (2006.01)

(52) Gemeinsame Patentklassifikation (CPC):
**F15B 1/08; F02C 6/16; F03B 17/06; F04F 1/06;**
F05B 2240/91; F05B 2260/42; F05B 2280/4002;
H02J 15/006; Y02E 10/20; Y02E 20/14;
Y02E 60/16; Y02P 70/50

(86) Internationale Anmeldenummer:
**PCT/EP2019/062592**

(87) Internationale Veröffentlichungsnummer:
**WO 2019/219801 (21.11.2019 Gazette 2019/47)**

(54) **VERFAHREN, SYSTEME UND GERÄTE FÜR DIE KOMPRESSION, EXPANSION UND/ODER SPEICHERUNG EINES GASES**

METHOD, SYSTEM AND DEVICES FOR THE COMPRESSION, EXPANSION AND/OR STORAGE OF A GAS

MÉTHODE, SYSTÈME ET DISPOSITIFS POUR LA COMPRESSION, L'EXPANSION ET/OU LE STOCKAGE D'UN GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2018 CH 6092018**

(43) Veröffentlichungstag der Anmeldung:
**24.03.2021 Patentblatt 2021/12**

(73) Patentinhaber: **GREEN-Y ENERGY AG**
**3415 Hasle bei Burgdorf (CH)**

(72) Erfinder:
• **BARHOUMI, Rafik**
**3415 Hasle bei Burgdorf (CH)**

• **BAUMANN, Patrick**
**4600 Olten (CH)**
• **SCHNARWILER, Dominik**
**6020 Emmenbrücke (CH)**

(74) Vertreter: **Felber, Josef et al**
**Felber & Partner AG**
**Dufourstrasse 116**
**8008 Zürich (CH)**

(56) Entgegenhaltungen:
**WO-A1-93/06367      US-A1- 2014 250 880**
**US-A1- 2016 025 111**

## Beschreibung

Dieses Verfahren dient zur Bewirtschaftung eines Druckspeichers als Bestandteil eines Energiespeichersystems, bestehend aus einer Arbeitsmaschine, einem Auffangbecken für die Aufnahme von Flüssigkeit, einer Verschiebevorrichtung und einem Druckspeicher für die Speicherung eines unter Druck stehenden gasförmigen Mediums. Der Druckspeicher ist zu einem gewissen Anteil mit einem flüssigen Medium gefüllt, um damit das Gas-Speichervolumen kontrollieren zu können, wobei die Beschickung des Druckspeichers mit unter Druck stehendem Gas mit der Entnahme von Flüssigkeit einhergeht. Die Entnahme von unter Druck stehendem Gas aus dem Druckspeicher geht einher mit der Beschickung von Flüssigkeit, insbesondere so dass der Speicherdruck konstant gehalten wird, indem eine unter Druck gesetzte Einheit Gas mit der aus dem Druckspeicher entnommenen Einheit Flüssigkeit mittels der Verschiebevorrichtung in den Druckspeicher eingebracht wird. Umgekehrt wird eine aus dem Druckspeicher zu entnehmende Einheit Gas mit Hilfe der in den Druckspeicher eingebrachten Einheit Flüssigkeit aus dem Druckspeicher befördert. Dieses Verfahren bzw. diese Anordnung ermöglicht es, den Druckspeicher komplett mit unter Druck stehendem Gas zu füllen und zu entleeren, was zu einer besseren Ausnützung des Druckspeichervolumens führt und somit die Energiedichte des Energiespeichersystems erhöht. Zudem werden die Druckschwankungen im Druckspeicher minimiert, was die Belastungen auf den Druckspeicher reduziert und die Wärmeflüsse in und aus dem Druckspeicher minimiert. Die Arbeitsmaschine kann für einen Betriebspunkt optimiert werden, unabhängig vom Füllstand des Druckspeichers, was weitere Vorteile mit sich bringt.

Energiespeichersysteme, wie beispielsweise eine Batterie oder ein Pumpspeicherkraftwerk, dienen der Speicherung von Energie, welche in Zeiten hoher Energienachfrage wieder verfügbar gemacht wird. Energiespeicherung ist in der konventionellen Energieproduktion etabliert und wird zunehmend für die Erzeugung von erneuerbarem, elektrischem Strom benötigt, um Überkapazitäten bei der Erzeugung und Verteilung des Stroms zu verhindern. Da beispielsweise die generierte Solarenergie und Windenergie von den lokalen Wetterverhältnissen abhängt und damit schlecht oder nicht auf den aktuellen Energiebedarf abgestimmt werden kann, sind Möglichkeiten zur Energiespeicherung nachgefragt.

Speichersysteme, welche Energie in Form eines unter Druck stehenden Gases speichern, verwenden in Schwachlastzeiten erzeugte Energie für die Verdichtung eines gasförmigen Mediums, vorwiegend Umgebungsluft, und speichern das unter Druck stehende Gas in einem Druckspeicher. Die im unter Druck stehenden Gas gespeicherte Energie kann zurückgewonnen werden, indem das unter Druck stehende Gas verwendet wird, um eine Expansionsmaschine anzutreiben, welche beispielsweise einen Generator antreibt. Dieses Konzept ist in verschiedenen Ausführungen als **CAES** bekannt, eine Abkürzung für *Compressed Air Energy Storage.* In der nachstehenden Beschreibung der Erfindung kann der Begriff "Luft" verwendet werden, obschon natürlich verschiedenste gasförmige Medien erfindungsgemäss eingesetzt werden können, wie zum Beispiel Erdgas, welches aus dem Pipelinenetz entnommen wird und unter höherem Druck in einem Druckspeicher gelagert wird und zu einem späteren Zeitpunkt wieder auf den Druck des Pipelinenetzes entspannt wird. Ganz allgemein wird Gas, welches aus einem ersten Reservoir entnommen wird, durch eine Druckerhöhung verdichtet und in einem zweiten Reservoir eingelagert, welches im Vergleich zum ersten Reservoir ein erhöhtes Druckniveau aufweist, und/oder Gas, welches dem zweiten Reservoir entnommen wird, wird entspannt und einem dritten Reservoir zugeführt wird, welches sich auf einem tieferen Druckniveau befindet als das zweite Reservoir, wobei dieses "dritte Reservoir" auch das erste Reservoir sein kann.

Bei der Verdichtung von Luft wird fast die gesamte aufgewendete Verdichtungsenergie in Wärme umgewandelt, welche entweder während der Verdichtung oder danach aus der verdichteten Luft abgeführt wird, um die verdichtete Luft bei gemässigten Temperaturen speichern zu können. Geschieht das Abführen von Wärme vorwiegend während der Verdichtung, heizt sich die verdichtete Luft weniger auf, als wenn die Wärme erst nach der Verdichtung aus der Luft abgeführt wird. Abhängig von der maximalen Temperaturdifferenz der Luft (Differenz zwischen der Temperatur der Luft am Anfang der Verdichtung und der maximalen Temperatur während der Verdichtung) spricht man von isothermer Verdichtung (Wärme wird grösstenteils während der Verdichtung abgeführt und die Temperaturdifferenz bleibt minimal), polytroper Verdichtung (Wärme wird teilweise während der Verdichtung abgeführt und die Temperaturdifferenz liegt zwischen der minimalen und maximalen Differenz) oder adiabatischer Verdichtung (Wärme wird grösstenteils nach der Verdichtung abgeführt, was zu einer maximalen Temperaturdifferenz führt). Das Gleiche gilt bei der Entspannung von verdichteter Luft, nur dass hier der Wärmefluss umgekehrt wird. Wird der verdichteten Luft während der Entspannung Wärme zugeführt, kühlt die Luft weniger ab als wenn der Luft nur vor oder nach der Entspannung Wärme zugeführt wird, wobei die Luft eine maximale Temperaturdifferenz erfährt. Ein Unterschied in der Ausführung der verschiedenen CAES-Konzepten liegt darin, wohin und bei welcher Temperaturdifferenz die Wärmeflüsse vor, während und/oder nach der Verdichtung abgeführt werden und woher die Wärme für die Entspannung der verdichteten Luft stammt und bei welcher Temperaturdifferenz die Wärme vor, während und/oder nach der Entspannung der Luft zugeführt werden.

Neben der Art der Verdichtung und Entspannung (isotherm, polytrop, adiabat / ein- oder mehrstufig / mit reversierbarer Arbeitsmaschine oder mit einer Verdichter- und Expansionsmaschine getrennt, unter Verbrennung von Brennstoffen) unterscheiden sich die CAES Konzepte in der Art des verwendeten Druckspeicherkonzepts. Hier wird unterschieden ob ein konstantes oder variables Druckspeichervolumen verwendet wird. Wird ein konstantes Druckspeichervolumen mit verdichteter Luft beladen oder entladen, ändert sich der Druck der sich im Druckspeicher befindlichen verdichteten Luft entsprechend linear mit der gespeicherten Menge verdichteter Luft. Dies erfordert eine Arbeitsmaschine, welche sich dem Speicherdruck anpassen kann und verhindert in der Regel das komplette Entleeren des Druckspeichers, da die Arbeitsmaschine nur in einem gewissen Druckbereich arbeiten kann. Dies hat zur Folge, dass immer eine gewisse Menge verdichteter Luft im Druckspeicher verbleiben muss um den minimalen Arbeitsdruck der Arbeitsmaschine nicht zu unterschreiten. Je nach Druckspeicher darf der Druck nur in einem bestimmten Bereich schwanken um den Druckspeicher nicht zu stark zu belasten, was das komplette Entleeren des Druckspeichers ebenfalls verunmöglicht. Auch die thermischen Wärmeflüsse in und aus dem Druckspeicher sind nicht vernachlässigbar, da die verdichtete Luft im Druckspeicher beim Füllen und Entleeren auch verdichtet bzw. entspannt wird.

Bei der Beladung oder Entladung eines Druckspeichers mit variablem Druckspeichervolumen kann die Druckänderung der sich im Druckspeicher befindlichen verdichteten Luft kontrolliert werden. Dies geschieht in der Regel mit dem Ziel, den Druck der sich im Druckspeicher befindlichen Luft während der Befüllung oder Entladung des Druckspeichers konstant zu halten oder zumindest in einem gewissen Bereich zu halten. Ein konstanter Speicherdruck ermöglicht es, den Druckspeicher komplett mit verdichteter Luft zu füllen und zu entleeren, ohne dabei die Betriebsparameter der Arbeitsmaschine dem Füllstand anpassen zu müssen. Zudem erfährt der Druckspeicher keine oder nur minimale Druckschwankungen, was die Belastungen auf den Druckspeicher reduziert. Auch die Wärmeflüsse in und aus dem Druckspeicher werden minimiert.

Bei der Realisierung der verschiedenen Konzepte stellen sich verschiedene technische Probleme, die nachfolgend aufgezeigt werden. So offenbart beispielsweise DE19803002892 / US4392354 eine Anordnung eines teilweise mit Wasser gefüllten Druckspeichers, bei welchem der Druck der verdichteten Luft im Druckspeicher durch eine Wassersäule konstant gehalten wird. Um das verdrängte Wasser beim Beladen des Druckspeichers mit verdichteter Luft aufzunehmen, muss sich am oberen Ende der Wassersäule ein Auffangbecken befinden. Bei einem Speicherdruck von beispielsweise 60 bar muss die Wassersäule 600 m hoch sein, was zu einer geografischen Abhängigkeit für den Druckspeicher führt.

US20120174569 A1 / US9109512 B2 zeigt eine Anordnung mit einem höher gelegenen Auffangbecken und einem hydraulisch angetriebenen 2-stufigen KolbenKompressor/Expander. Bei der Entleerung des Druckspeichers wird mit dem hydrostatischen Druck der Wassersäule der Mindestdruck im Druckspeicher gehalten. Um den Druckspeicher auf ein höheres Druckniveau zu bringen als es die Höhendifferenz zwischen Druckspeicher und Auffangbecken zulässt, muss lediglich das Auffangbecken vom Druckspeicher isoliert werden. Sobald bei der Entladung des Druckspeichers der Druck im Druckspeicher dem hydrostatischen Druck der Wassersäule entspricht, wird das Auffangbecken wieder mit dem Druckspeicher verbunden und hält bei der weiteren Entleerung des Druckspeichers den Druck über dem minimalen Speicherdruck. Auch hier besteht die geografische Abhängigkeit für ein höher gelegenes Auffangbecken.

US20120305411A1 / US8801332B2 zeigt eine Konstruktion eines Druckspeichers, welcher unter Wasser aufgestellt wird. Am unteren Ende des Druckspeichers befindet sich eine Öffnung, durch welche das Wasser durch den hydrostatischen Druck in den Druckspeicher gedrückt wird. Durch eine oberhalb des Wasserspiegels befindliche Arbeitsmaschine wird verdichtete Luft in oder aus dem Behälter geführt. Es gibt weitere Ausführungen von Unterwasser-(Konstant)Druckspeichern, beispielsweise in Form eines mit Luft gefüllten Ballons, welcher unter Wasser gehalten wird. Alle diese Konfigurationen sind von der Geografie abhängig und der Druckbehälter erfährt durch die gespeicherte verdichtete Luft eine Auftriebskraft, welche kompensiert werden muss, um den Druckspeicher unter Wasser zu halten.

Weiter ist aus dem Stand der Technik nach WO1993006367A1 ein System bekannt, bei welchem zwei ausgewaschene Salzkavernen teils mit Flüssigkeit gefüllt sind und auf der Flüssigkeits- sowie auf der Gas Seite eine fluidische Verbindung aufweisen. Solche Salzstöcke zum Aussolen von Salzkavernen sind nur in ganz wenigen ausgewählten geografischen Gebieten überhaupt vorhanden. Das System ist nur in solchen Regionen einrichtbar und betreibbar und somit nur sehr stark eingeschränkt umsetzbar. Beim Füllen der tiefer gelegenen Kaverne mit verdichteter Luft wird durch die gleichzeitige Entnahme von Flüssigkeit die Druckschwankung in der Kaverne reduziert. Das System ist auf ein höher gelegenes Auffangbecken angewiesen und die beiden Kavernen müssen in verschiedenen Tiefenlagen angeordnet sein, was einer geografischen Abhängigkeit entspricht. Falls die vorhandene Höhendifferenz zu klein ist, das heisst der hydrostatische Druck kleiner ist als der Druck in der tiefer gelegenen Kaverne, wird mit einem Flüssigkeitsmotor bzw. einer Flüssigkeitspumpe der Druck in der Kaverne reguliert. Dieser Flüssigkeitsmotor bzw. diese Flüssigkeitspumpe reduziert den Gesamtwirkungsgrad und die Leistungsaufnahme bzw. Leistungsabgabe des Systems. Das System nach WO1993006367A1, und insbesondere das Ausführungsbeispiel nach Figur 6, ist generell auf eine wesentliche Höhendifferenz zwischen dem Druckspeicher 4, dem "Verschiebebehälter" 5 und dem Auffangbecken 21 angewiesen. Um mit dem hydrostatischen Druck einer Flüssigkeitssäule das Verfahren sinngemäss anzuwenden und eine technisch verwertbare Energiedichte für die Speicherung von Energie zu erzielen, ist eine Höhendifferenz von über 100 Metern notwendig. Damit kann eine Energiedichte in einer minimalen sinnvollen Grössenordnung um 1 kWh/m$^3$ erreicht werden. Zudem handelt es sich um ein geschlossenes Luftsystem, bei welchem ein, über die zwei Kavernen betrachtet, hermetisch eingeschlossenes Luftvolumen zur Speicherung von Energie komprimiert wird, welches einige Nachteile mit sich bringt. Ein geschlossenes Luftsystem weist bei gleichem Betriebsdruck generell eine deutlich geringere Energiedichte auf als offene Luftsysteme, da die totale Luftmasse vordefiniert ist und das Einbringen von zusätzlicher Luftmasse in das System nicht möglich ist. Somit resultiert ein System mit tieferer Energiedichte bei gleichem Betriebsdruck. Dagegen kann bei offenen Luftsystemen mit Hilfe eines zyklischen Prozesses dem System wiederholt Luftmasse hinzugefügt bzw. entnommen werden.

Um die geografische Abhängigkeit bzw. die benötige Höhendifferenz zu eliminieren, kann wie in WO2012160311A2 gezeigt, der Druck im Druckspeicher mit einer Flüssigkeit kontrolliert werden, indem bei der Beladung des Druckspeichers mit verdichteter Luft die Flüssigkeit aus dem Druckspeicher mittels eines Flüssigkeitsmotors in ein Auffangbecken entspannt wird, welches keine Höhendifferenz aufweisen muss. Umgekehrt wird bei der Entnahme von verdichteter Luft aus dem Druckspeicher Flüssigkeit aus dem Auffangbecken in den Druckspeicher gepumpt, um den Druck im Druckspeicher zu kontrollieren. Dies hat den Nachteil, dass der Gesamtwirkungsgrad und die gesamte Leistungsaufnahme des Systems (im Verhältnis zur installierten Luft-Verdichter/Expander-Leistung und Flüssigkeits-Motor/Pumpen-Leistung) kleiner wird, da bei der Verdichtung von Luft und dem Füllen des Druckspeichers gleichzeitig Flüssigkeit aus dem Druckspeicher entspannt werden muss und umgekehrt bei der Expansion von Luft gleichzeitig Flüssigkeit in den Druckspeicher gepumpt werden muss.

Die Lehre nach WO2008023901 A1 / US20090200805 A1 / US7663255 B2 eliminiert die geografische Abhängigkeit und das Problem mit der Leistungs- und Wirkungsgradreduktion durch eine zusätzliche Flüssigkeits-Pumpe/Motor, indem zusätzlich zum ersten Druckspeicher, welcher teilweise mit einer Flüssigkeit gefüllt ist und mit dem Luft-Verdichter/Expander verbunden ist, ein zweiter Druckspeicher wiederum teilweise mit einer Flüssigkeit gefüllt vorhanden sein muss. Dieser zweite Druckspeicher ist gasseitig hermetisch abgedichtet und mit dem ersten Druckspeicher über eine Leitung verbunden, so dass beim Beladen des ersten Druckspeichers mit verdichteter Luft eine in die Leitung eingebaute Flüssigkeitspumpe Flüssigkeit aus dem ersten in den zweiten Druckspeicher pumpt und dort das eingeschlossene Gas verdichtet. Wenn der erste Drucktank leer ist, das heisst mit Flüssigkeit gefüllt ist, erhält das im zweiten Druckspeicher eingeschlossene Gas den minimalen Systemdruck. Wenn der erste Druckspeicher mit verdichteter Luft gefüllt ist und die Flüssigkeit in den zweiten Druckspeicher gepumpt wurde, herrscht im zweiten Druckbehälter ein um ein Vielfaches höherer Druck als im ersten Druckbehälter. Der zweite Druckspeicher kann im Verhältnis zum maximalen Betriebsdruck und seinem Volumen wenig Energie speichern, was das System teuer macht.

Entsprechend ist es die **Aufgabe der vorliegenden Erfindung**, ein konstruktiv einfaches, kostengünstiges und zuverlässiges Druckspeichersystem zu schaffen, welches in der Lage ist, den Druck der verdichteten Luft im Druckspeicher bei der Beladung bzw. Entladung des Druckspeichers mit verdichteter Luft mit einer Flüssigkeit zu kontrollieren,

- erstens, ohne dabei auf einen hydrostatischen Druck einer Flüssigkeitssäule (höher gelegenes Auffangbecken oder Unterwasserspeicher) angewiesen zu sein, das heisst, dass keine Höhendifferenz zwischen zwei Behältern nötig ist,

- und zweitens, ohne dass in einem oder mehreren Druckspeichern und/oder in sonstigen Behältern ein hermetisch eingeschlossenes Gaspolster nötig ist,

- und drittens, ohne dem Nachteil der oben erwähnten Leistungs- und Wirkungsgradreduktion, das heisst, dass für die Verschiebung von Flüssigkeit nur das Überwinden einer Druckdifferenz verursacht durch Reibungs- und Strömungsverlusten sowie einer Druckdifferenz verursacht durch eine allenfalls vorhandene Höhendifferenz nötig ist,

und mit dem Vorteil einer hohen Energiedichte im System, und mit einer guten Kontrolle über die Wärmeflüsse in und aus dem System, welche das eigentliche Druckspeichersystem mit einer effizienten und flexiblen Wärme- bzw. Kälteerzeugung ergänzt.

Diese Aufgabe wird durch ein Druckspeichersystem **gemäss den Merkmalen des Patentanspruchs 1 für ein Verfahren** und gemäss den Merkmalen des **Patentanspruchs 8 für eine Einrichtung** zur Durchführung des Verfahrens gelöst.

Die Eigenschaft den Druck im Druckspeicher bei der Befüllung mit verdichtetem Gas bzw. Entnahme von verdichtetem Gas mit einer Flüssigkeit zu kontrollieren, insbesondere konstant zu halten,

- erstens, ohne dabei auf einen hydrostatischen Druck einer Flüssigkeitssäule (höher gelegenes Auffangbecken oder Unterwasserspeicher) angewiesen zu sein, das heisst, dass keine Höhendifferenz zwischen zwei Behältern nötig ist,

- und zweitens, ohne dass in einem oder mehreren Druckspeichern und/oder in sonstigen Behältern ein hermetisch eingeschlossenes Gaspolster nötig ist,

- und drittens, ohne dem Nachteil der oben erwähnten Leistungs- und Wirkungsgradreduktion, das heisst, dass für die Verschiebung von Flüssigkeit nur das Überwinden einer Druckdifferenz verursacht durch Reibungs- und Strömungsverlusten sowie einer Druckdifferenz verursacht durch eine allenfalls vorhandene Höhendifferenz nötig ist,

bezeichnen wir im Folgenden auch als bei Bedarf leistungsarme Befüllung des Druckspeichers mit verdichtetem Gas bzw. als bei Bedarf leistungsarme Entnahme von verdichtetem Gas aus dem Druckspeicher oder im Allgemeinen als bei Bedarf leistungsarme Verschiebung von verdichtetem Gas in oder aus dem Druckspeicher. Das System ist auf keine Höhendifferenz angewiesen, kann aber beispielsweise mit einer Höhendifferenz zwischen zwei Behältern von 10 Metern arbeiten, welche zum Beispiel durch eine Anforderung für einen spezifischen Aufstellungsort gegeben sein kann. Bei dieser Höhendifferenz von 10 Metern kann von einer Wasser-Flüssigkeitssäule ein hydrostatischer Druck von 1 bar aufgebaut werden, was für die Energiespeicherung aufgrund der geringen Energiedichte technisch nicht verwertbar ist. Die maximale Energiedichte, die durch diesen hydrostatischen Druck von 1 bar erzielt werden kann, ist gegeben, wenn das Ausgleichsbecken bzw. das tiefere Druckniveau auf 1 bar Umgebungsdruck liegt und der Speicherdruck mit dem hydrostatischen Druck von 1 bar auf 2 bar verdoppelt werden kann. Dann resultiert folgende Energiedichte:

$$Energiedichte = p_2 \cdot \left( \frac{p_1}{p_2} - 1 + \ln\frac{p_2}{p_1} \right) = 2bar \cdot \left( \frac{1bar}{2bar} - 1 + \ln\frac{2bar}{1bar} \right)$$

$$= 200000Pa \cdot \left( \frac{100000Pa}{200000Pa} - 1 + \ln\frac{200000Pa}{100000Pa} \right) \cdot \frac{1}{3600000}\frac{kWh}{J} = 0{,}011\ \frac{kWh}{m^3}$$

Diese tiefe Energiedichte ist technisch nicht verwertbar um Energie zu speichern. Technisch sinnvolle Energiedichten für die Speicherung von Energie beginnen bei der Grössenordnung um 1 kWh/m$^3$. Systeme, welche mit einem hydrostatischen Druck eine sinnvolle Energiedichte in dieser Grössenordnung erreichen, sind auf wesentliche Höhendifferenzen über 100 Metern angewiesen. Somit können diese vorliegenden erfindungsgemässen Verfahren, Systeme und die für die Umsetzung nötigen Geräte für die Kompression, Expansion und/oder Speicherung eines Gases klar von solchen bekannten Systemen abgegrenzt werden. Weiter liegt bei der Verschiebung von verdichtetem Gas in oder aus dem Druckspeicher für die Verschiebung von Flüssigkeit nur eine Druckdifferenz für das Überwinden von Reibungs- und Strömungsverlusten sowie eine Druckdifferenz verursacht durch eine allenfalls vorhandene Höhendifferenz vor. Die resultierende kombinierte Druckdifferenz setzt sich zusammen aus den Reibungs- und Strömungsverlusten plus den hydrostatischen Druck einer Wasser-Flüssigkeitssäule, welcher beispielsweise bei einer Höhendifferenz von 10 Metern 1 bar beträgt. Bei dieser Druckdifferenz ist die Leistungs- und Wirkungsgradreduktion weiter vernachlässigbar und das Verfahren der vorliegenden Erfindung kann sinngemäss angewendet werden.

Dadurch, dass die Beschickung des Druckspeichers mit verdichteter Luft mit der Entnahme von Flüssigkeit aus dem Druckspeicher einhergeht und die entnommene Flüssigkeit im gleichen Zug dafür verwendet wird, die verdichtete Luft in den Druckspeicher zu verschieben, kann der Druck im Druckspeicher kontrolliert werden, insbesondere konstant gehalten werden. Ebenfalls kann die verdichtete Luft in den Druckspeicher eingebracht werden, ohne die sich im Druckspeicher befindliche verdichtete Luft weiter zu verdichten. Die aus dem Druckspeicher entnommene Menge Flüssigkeit wird nach dem Verschiebevorgang zur Einbringung von verdichteter Luft in den Druckspeicher in das Auffangbecken verschoben, um bei der Entnahme von verdichteter Luft aus dem Druckspeicher wieder in den Druckspeicher verschoben zu werden.

Um den Druckspeicher mit Arbeitsmaschinen (Verdichter/Turbine) beliebiger Bauweise zu befüllen bzw. zu entleeren, ist zusätzlich zu dem Druckspeicher und dem Auffangbecken eine Verschiebevorrichtung notwendig. Diese Verschiebevorrichtung kann zusätzlich als Verdichtungsstufe bzw. als Entspannungsstufe verwendet werden. Die Verschiebevorrichtung kann auch parallel und/oder seriell angeordnet werden. Da die Verschiebevorrichtung auch als Verdichter-/Entspannungs-Stufe verwendet werden kann, wird nicht zwingenderweise eine zusätzliche Arbeitsmaschine (Verdichter/Turbine) benötigt, oder es kann zumindest eine Verdichter/Entspannungs-Stufe in der Arbeitsmaschine durch die Verschiebevorrichtung ersetzt werden.

Die Flüssigkeit im System kann bei Bedarf als Wärmepuffer benutzt werden, um Verdichtungswärme zu speichern und diese Wärme später bei der Expansion wieder zu verwenden, um ein Unterkühlen des Systems zu verhindern. Es besteht auch die Möglichkeit, die Verdichtungswärme anderweitig zu verwenden (z.B. in Gebäuden für das Warmwasser und die Heizung), und die Wärme für die Expansion aus der Umgebung dem System wieder zuzuführen oder umgekehrt kann die Verdichtungswärme an die Umgebung abgegeben werden und Wärme für die Expansion aus anderweitigen Quellen (z.B. für die Gebäudekühlung) dem System zugeführt werden. Natürlich kann die Verdichtungswärme anderweitig verwendet werden und die Wärme für die Expansion aus einem zu kühlenden Objekt bezogen werden. Dies ist sinnvoll, da die Verdichtungswärme auf einem anderen Temperaturniveau abgegeben werden kann als das Temperaturniveau, bei welchem die Wärme für die Expansion dem System wieder zugeführt wird.

Durch einen konstanten Druck im Druckspeicher fallen die Kompressions- bzw. Expansionsvorgänge im Druckspeicher selbst weg, wodurch die Wärmeflüsse in und aus dem Druckspeicher ebenfalls wegfallen und alle Verdichtungswärme und/oder Expansionskälte am Kompressor bzw. Expander abgeführt werden kann. Somit resultiert ein Druckspeichersystem kombiniert mit effizienter Wärme- bzw. Kälteerzeugung, indem die Wärmeflüsse in und aus dem Druckspeicher minimiert werden. Ein sogenanntes System mit Trigeneration, eine Kraft-Wärme-Kälte-Kopplung, ermöglicht die Sektorkopplung zwischen Elektrizität, Wärme- und Kälteerzeugung.

Um die gegebenen Abhängigkeiten von Wärmeerzeugung und Befüllung des Druckspeichers sowie Kälteerzeugung und Entleeren des Druckspeichers zu beseitigen und volle Flexibilität bezüglich Bedarfsdeckung von Elektrizität, Wärme und Kälte zu erreichen, muss das Druckspeichersystem mindestens zwei parallel angeordnete Verdichter-/Entspannungs-Stufen enthalten. Damit kann unabhängig vom Füllstand des Druckspeichers Wärme bzw. Kälte erzeugt werden, indem zeitgleich sowohl Luft verdichtet wie auch Luft expandiert werden kann.

Vorzugsweise wird der Verschiebebehälter teilweise mit einer festen Masse gefüllt, welche als Regeneratormasse dient. Beispielsweise kann Metall oder Keramik, vorzugsweise mit einer grossen Oberfläche im Vergleich zum Volumen, verwendet werden, um Wärme in die Luft oder aus der Luft abzuführen, welche konsekutiv von der Flüssigkeit oder durch einen Wärmetauscher aufgenommen bzw. abgegeben wird.

Es versteht sich, dass die Flüssigkeit sowohl in direktem Kontakt mit der Luft stehen kann oder durch verschiedenste Medientrennvorrichtungen wie beispielsweise Blasen, Kolben, Membranen, usw. von der Luft separiert werden kann. Die Flüssigkeit kann entweder direkt mit einer Flüssigkeitspumpe/-motor verschoben werden oder über Kolben, welche beispielsweise durch einen Hydraulik- oder Pneumatik-Kolben oder durch eine Kurbelwelle mit Pleuel verschoben werden.

Die Erfindung wird nachfolgend anhand der Figuren beschrieben und ihre Funktion wird erklärt.

Es zeigt:

Fig. 1   eine schematische Anordnung eines Druckspeichersystems mit einer Verschiebevorrichtung. Um die Verschiebevorrichtung erfindungsgemäss zu verwenden, muss ein An- und Abtrieb, ein Druckspeicher und ein Auffangbecken zur Verfügung stehen;

Fig. 2   die schematische Anordnung des Druckspeichersystems von Fig. 1 und eine exemplarische Ausführungsform der Verschiebevorrichtung;

Fig. 2a-2z   alle verschiedenen Betriebsmodi der Anordnung von Fig. 2;

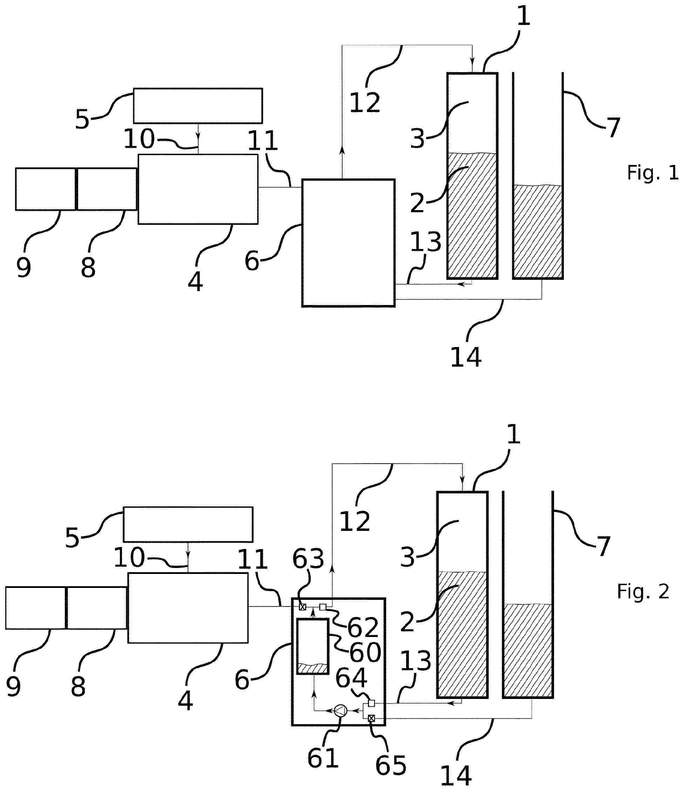

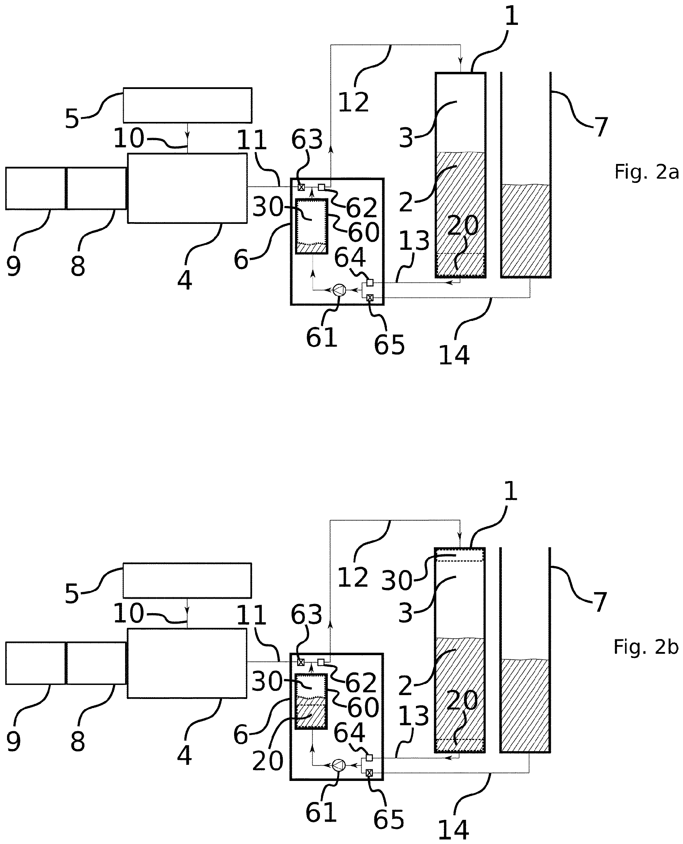

Fig. 2a-2f   den Betriebsmodus "Kompressionsmodus ohne Nachverdichten";

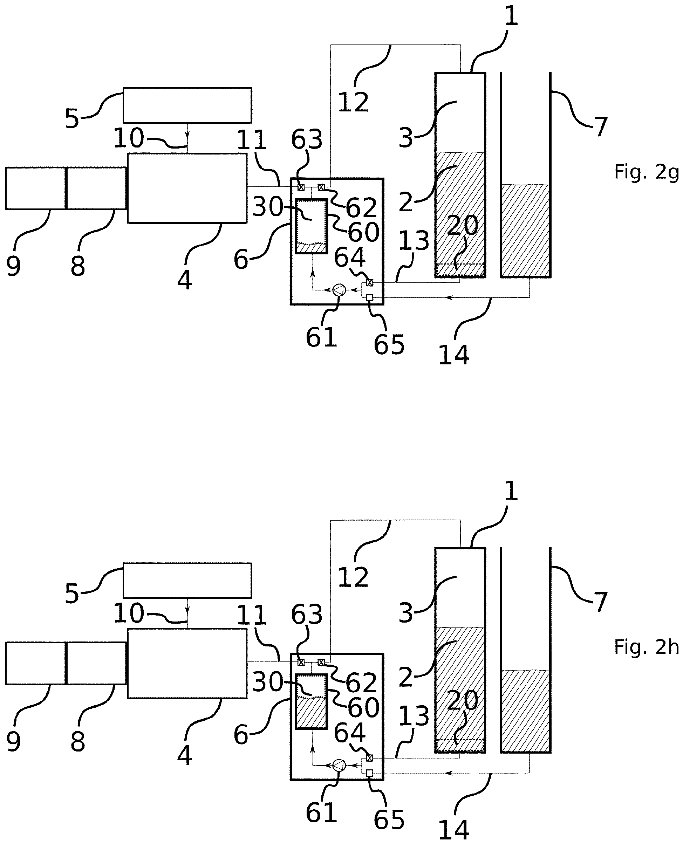

Fig. 2g-2m   den Betriebsmodus "Kompressionsmodus mit Nachverdichten";

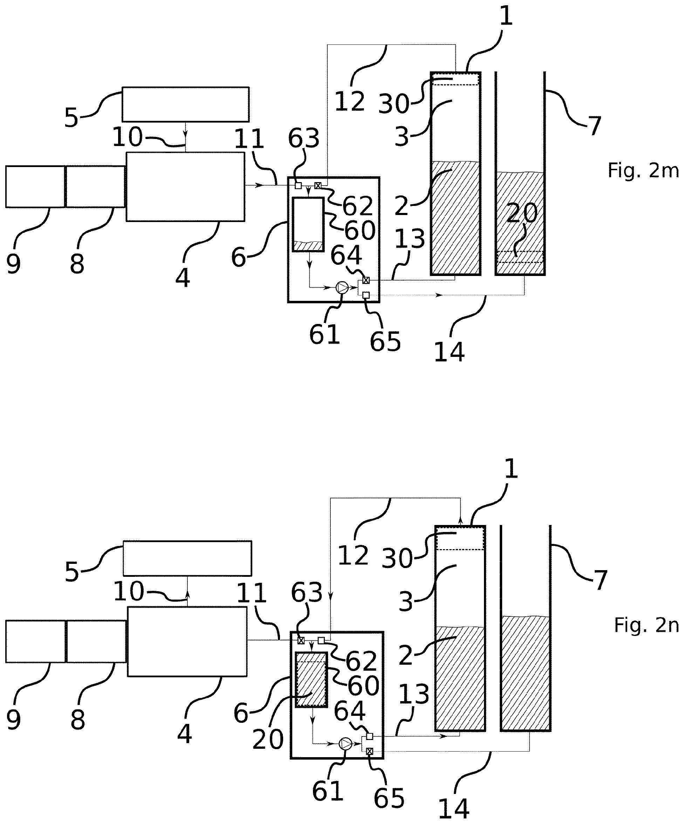

Fig. 2n-2s   den Betriebsmodus "Expansionsmodus ohne Vorentspannung";

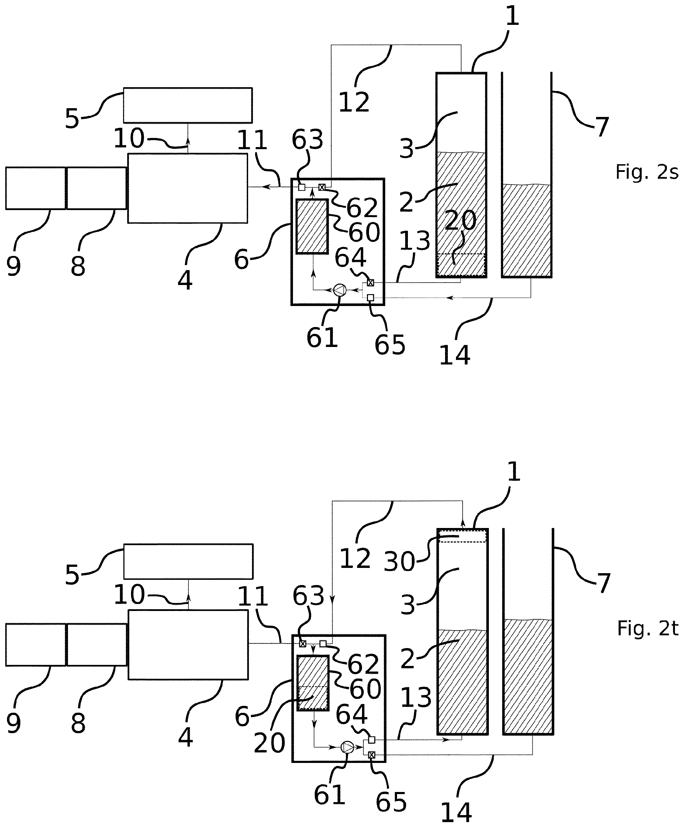

Fig. 2t-2z   den Betriebsmodus "Expansionsmodus mit Vorentspannung";

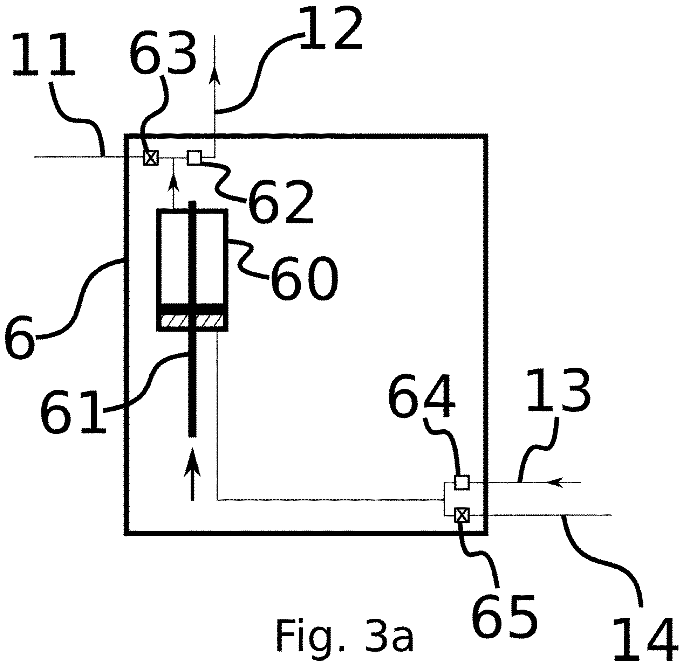

Fig. 3a-3c   mögliche Ausführungsformen der Verschiebevorrichtung mit einem oder mehreren und getrennten und/oder kombinierten Gas- und Flüssigkeits-Verschiebebehältern und als Kolben ausgeführte Verschiebemechanismen;

Fig. 3a   einen kombinierten Gas- und Flüssigkeits-Verschiebebehälter;

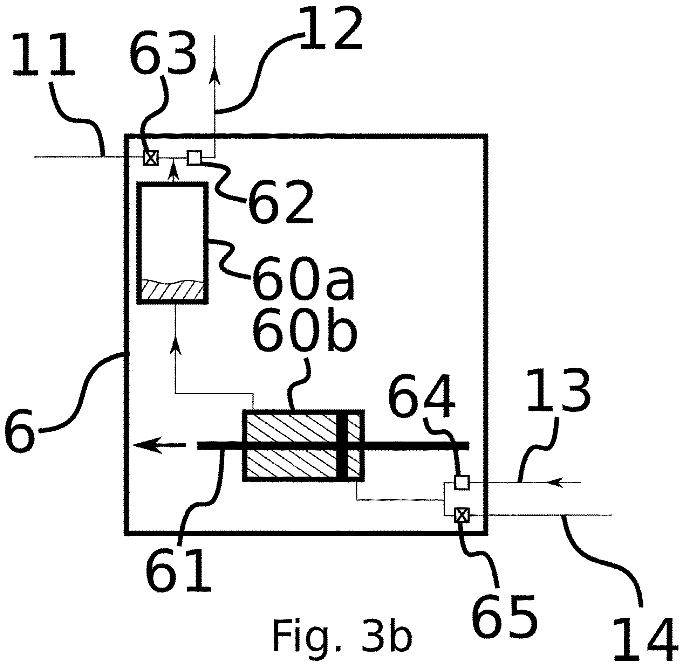

Fig. 3b   einen kombinierten Gas- und Flüssigkeits-Verschiebebehälter sowie einen getrennten Flüssigkeits-Verschiebebehälter;

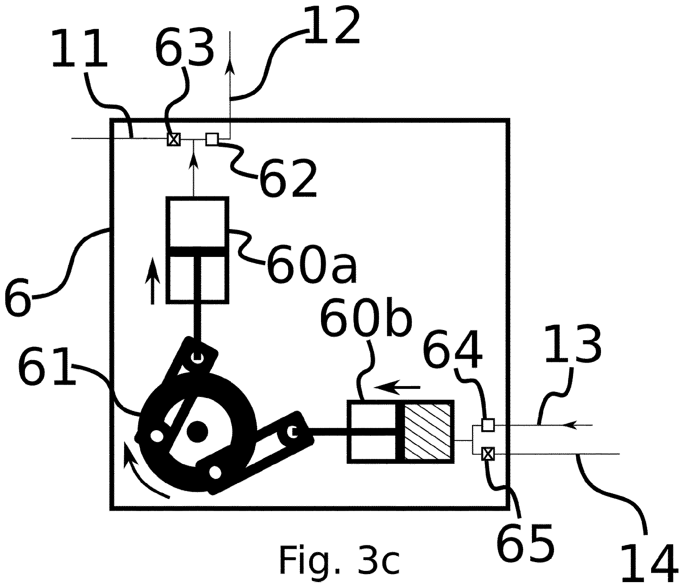

Fig. 3c   getrennte Gas- und Flüssigkeits-Verschiebebehälter;

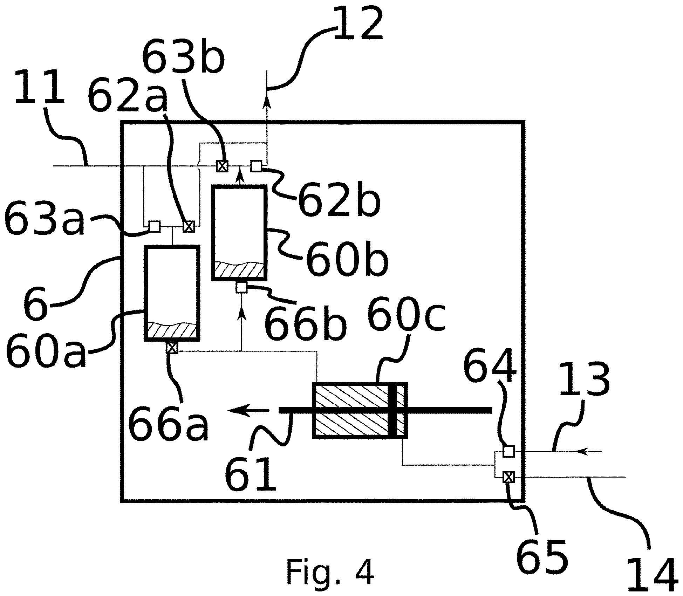

Fig. 4   eine mögliche parallele Anordnung von zwei kombinierten Verschiebebehältern 60a, 60b, einem getrennten Verschiebebehälter 60c und einem Kolben mit Kolbenstange als Verschiebemechanismus 61;

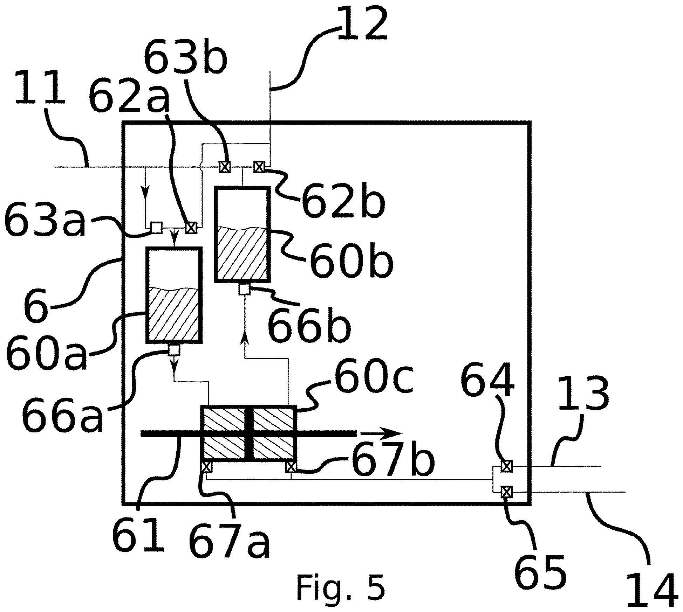

Fig. 5   eine weitere mögliche parallele Anordnung von Verschiebebehältern 60a und 60b und einem Kolben als Verschiebemechanismus 61;

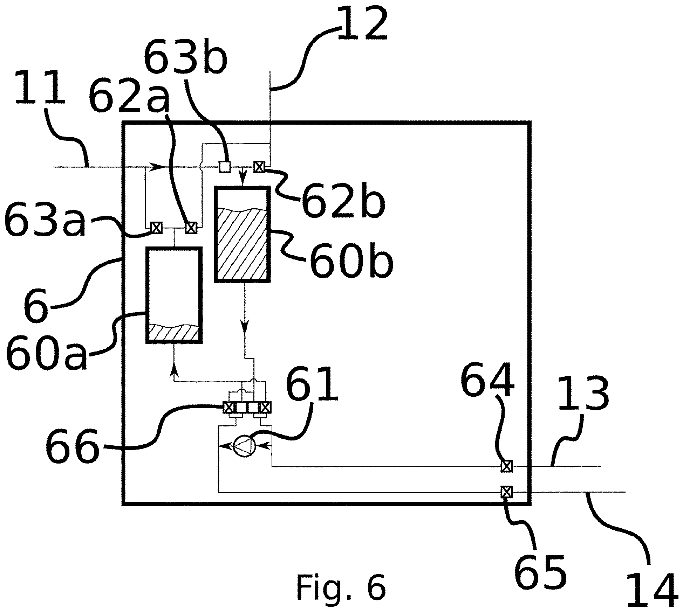

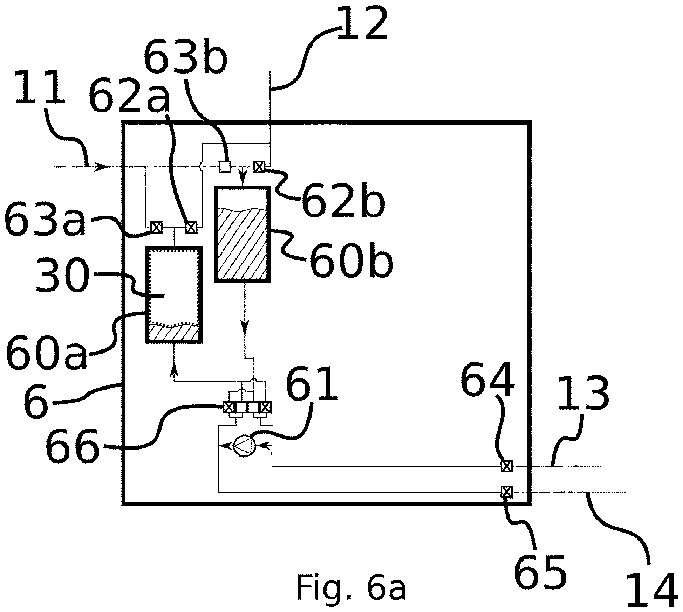

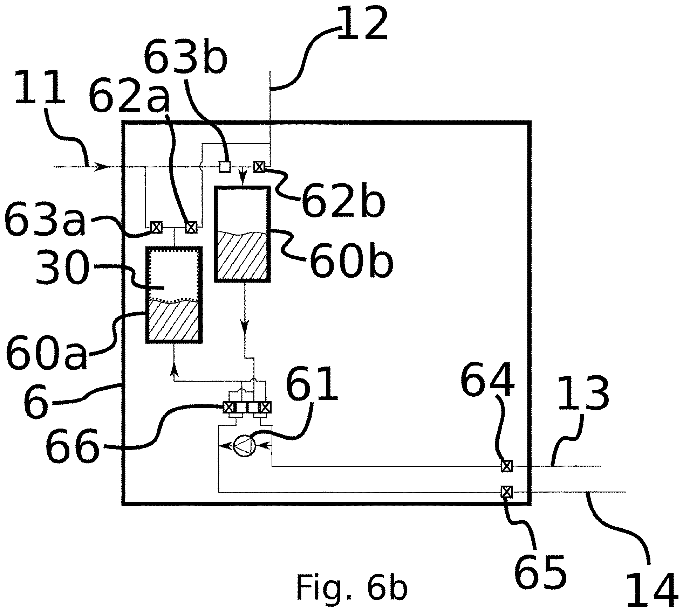

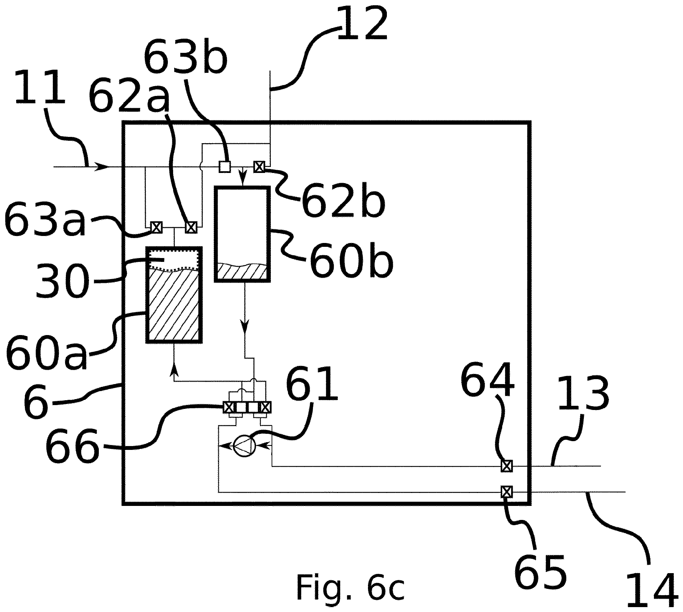

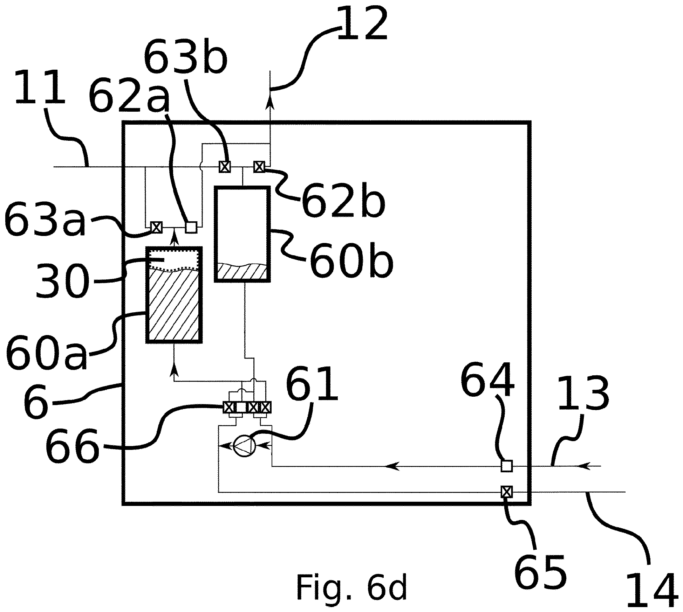

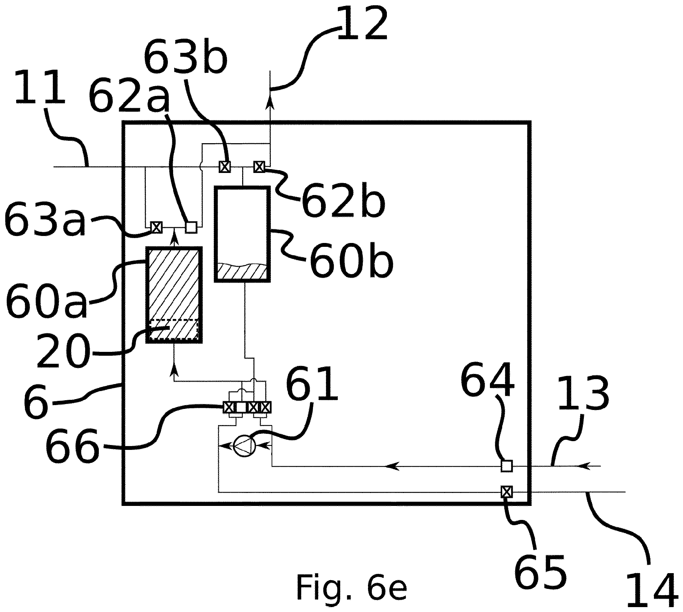

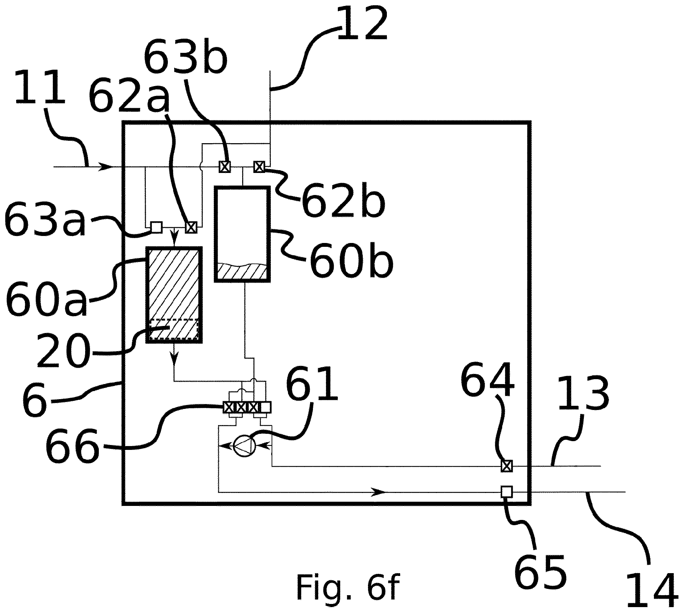

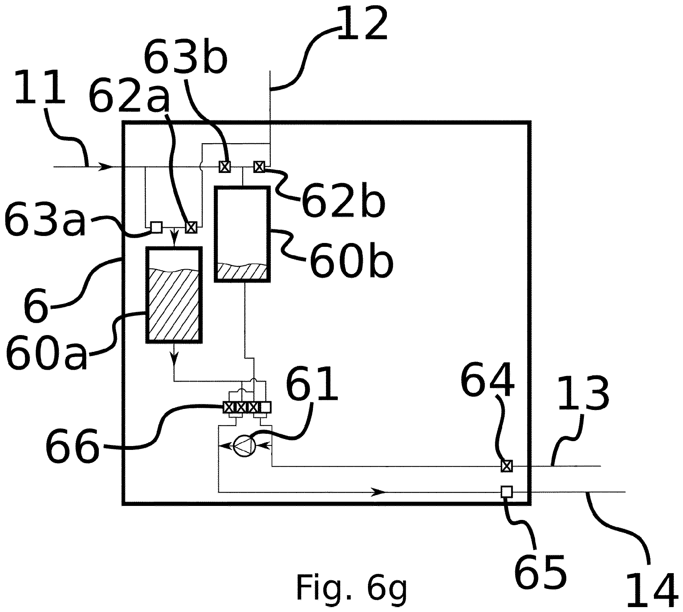

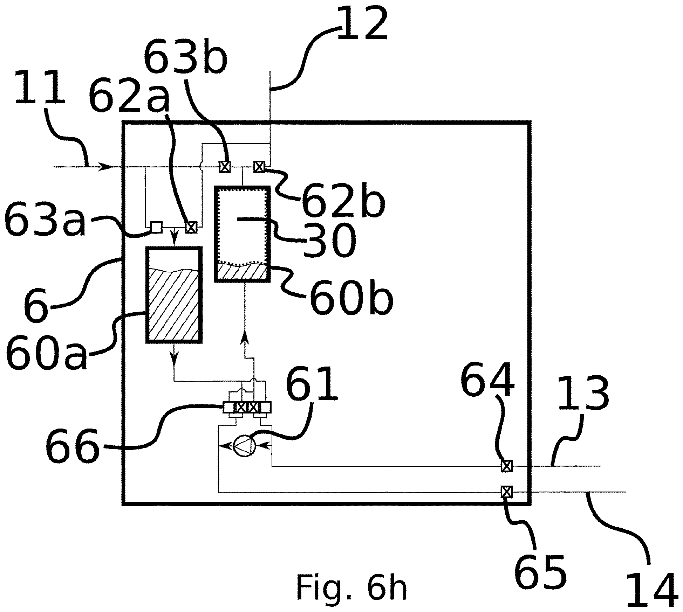

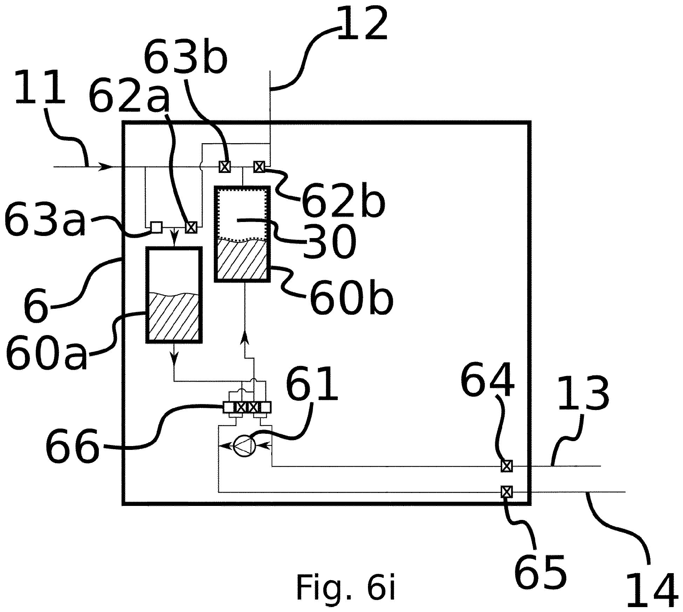

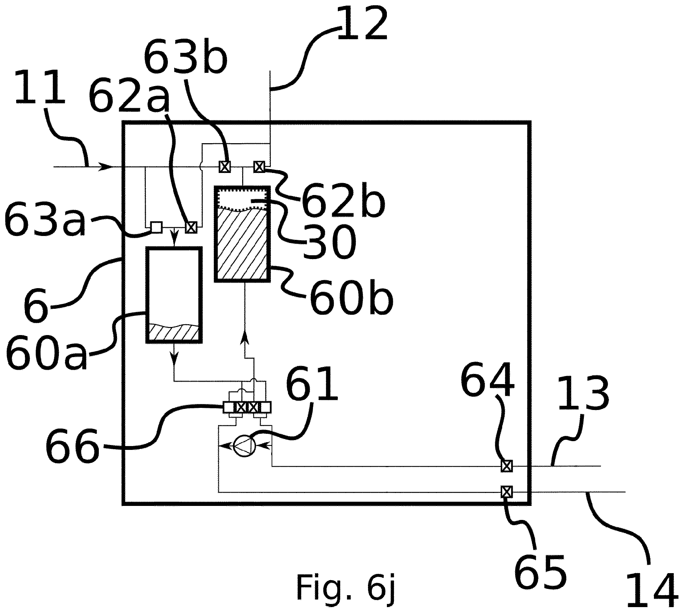

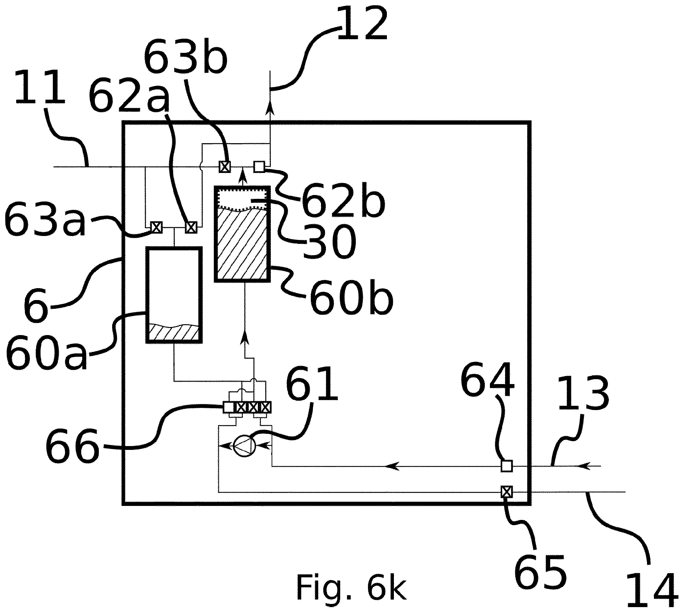

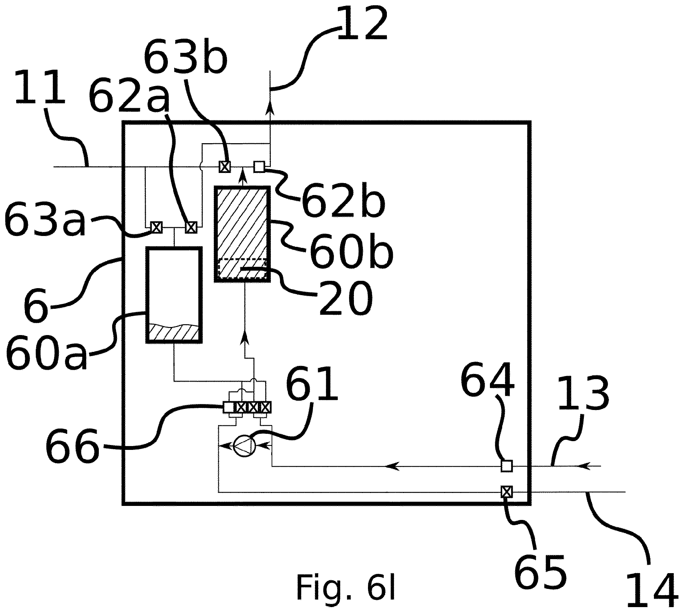

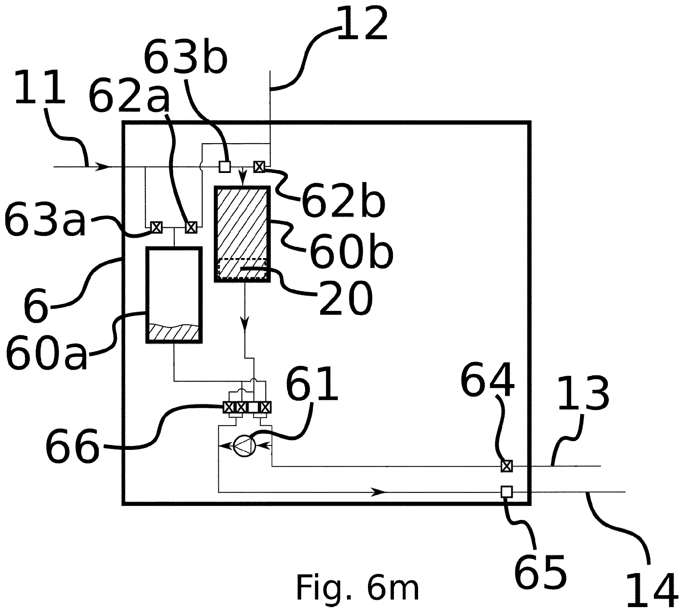

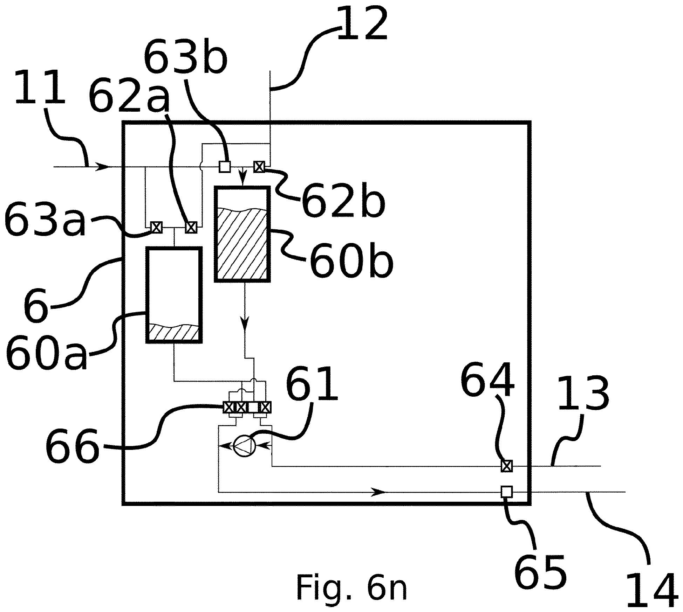

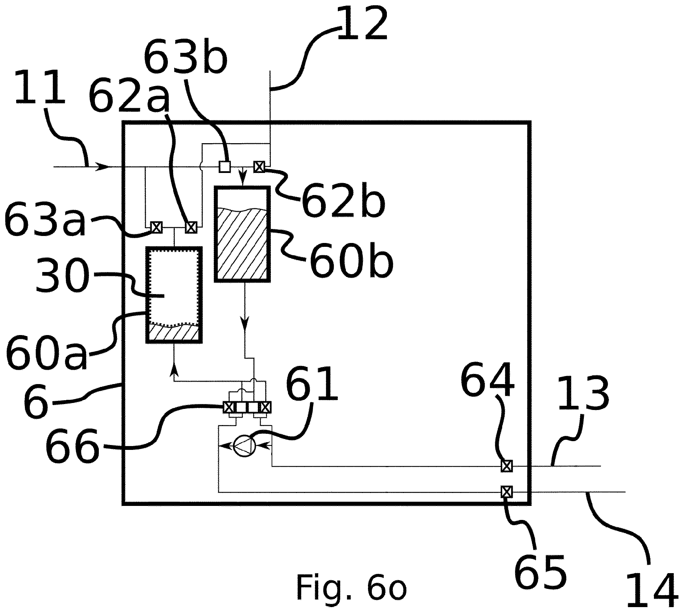

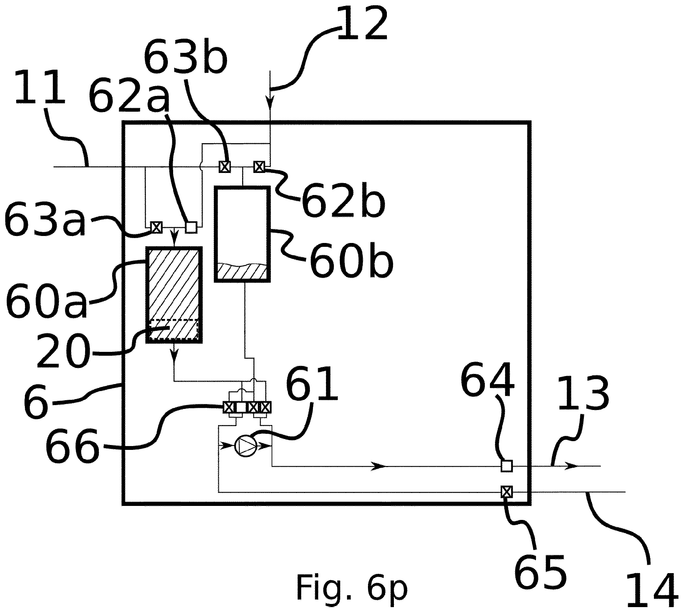

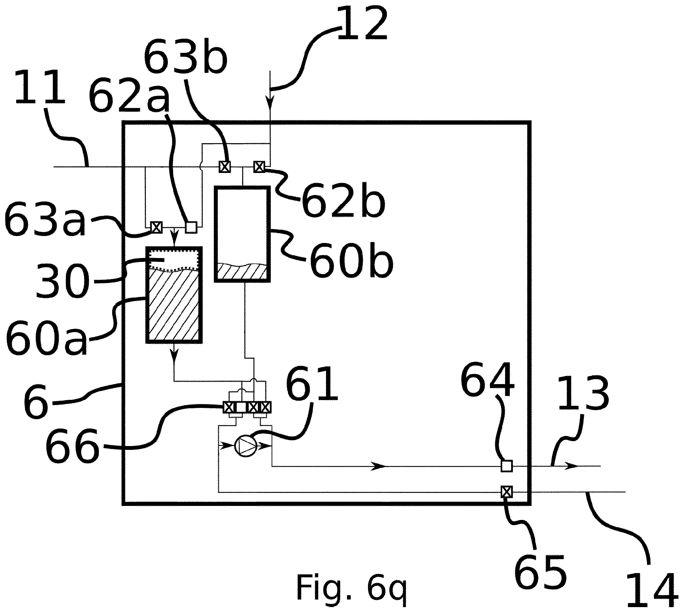

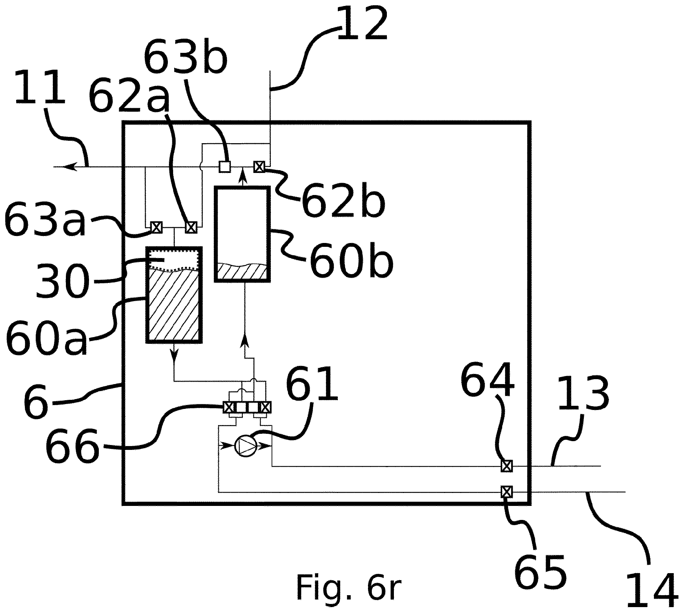

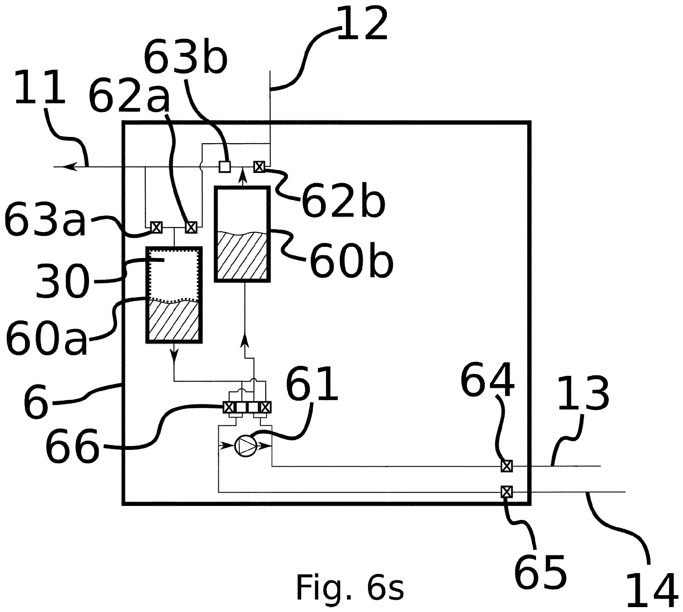

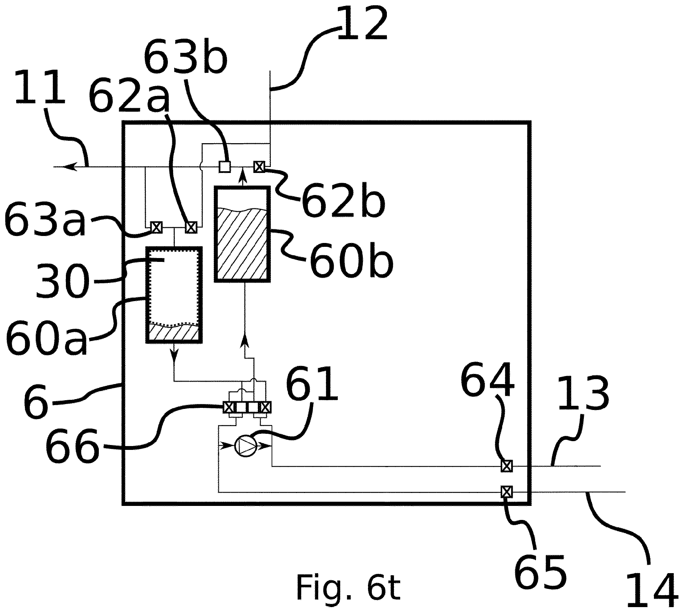

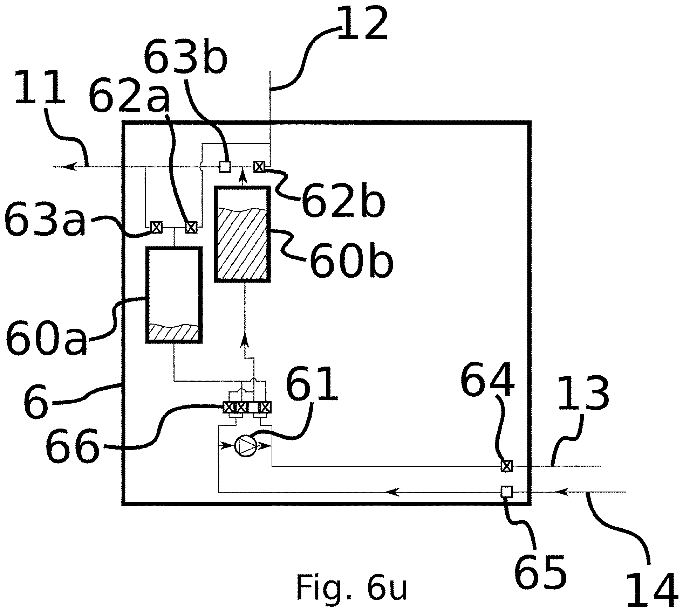

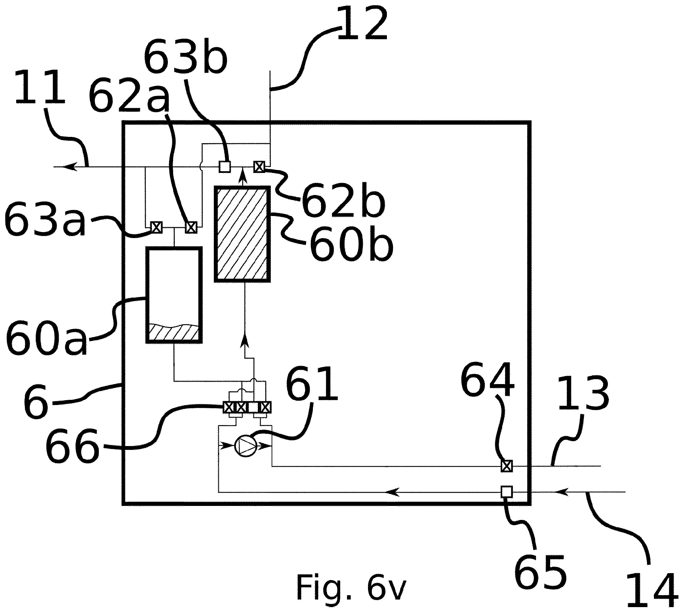

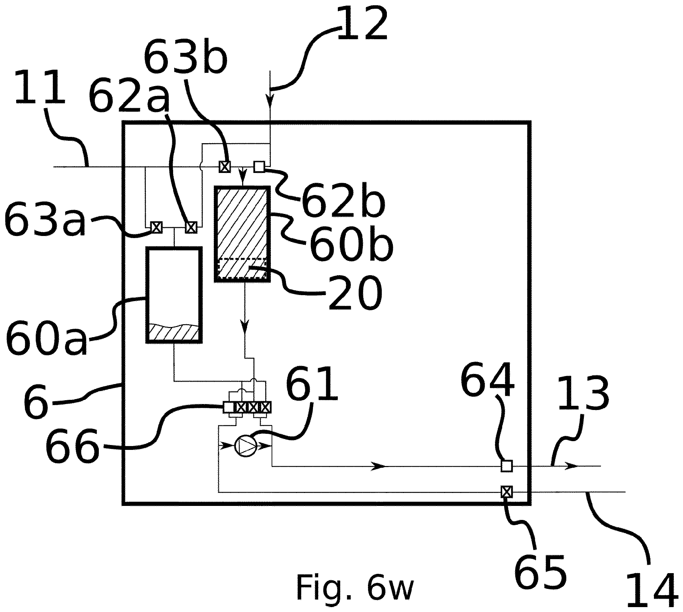

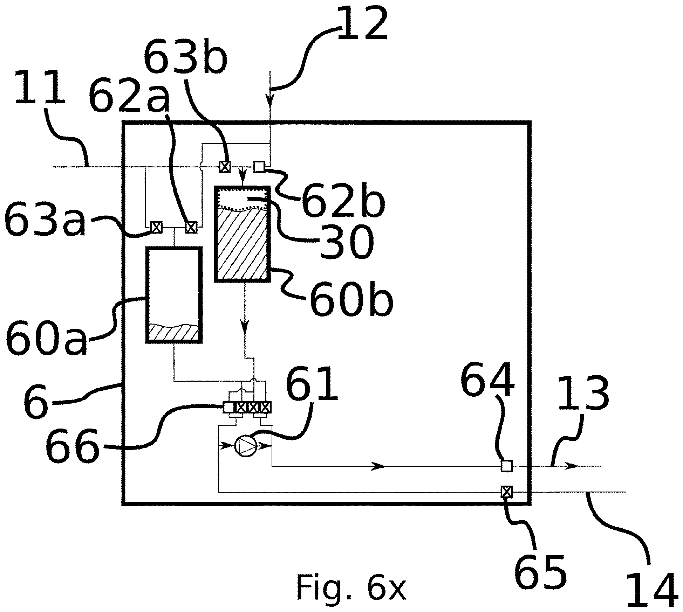

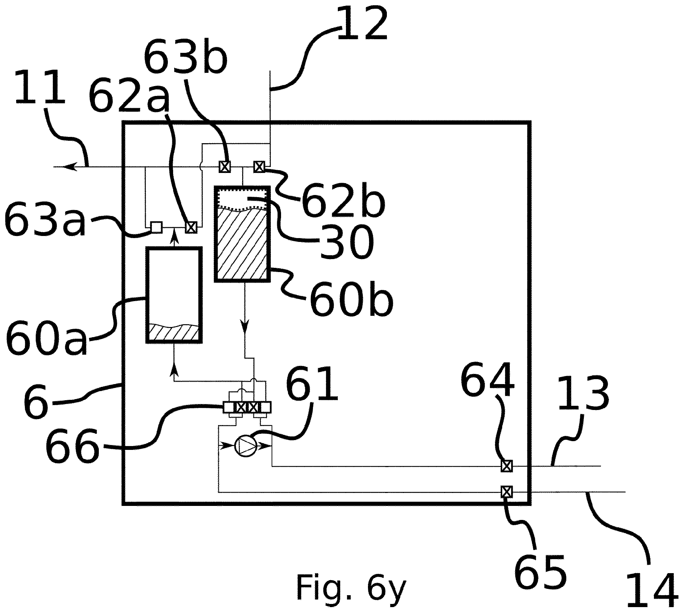

Fig. 6   eine mögliche parallele Ausführungsform von Verschiebebehältern 60a und 60b und einer Flüssigkeitspumpe als Verschiebemechanismus 61;

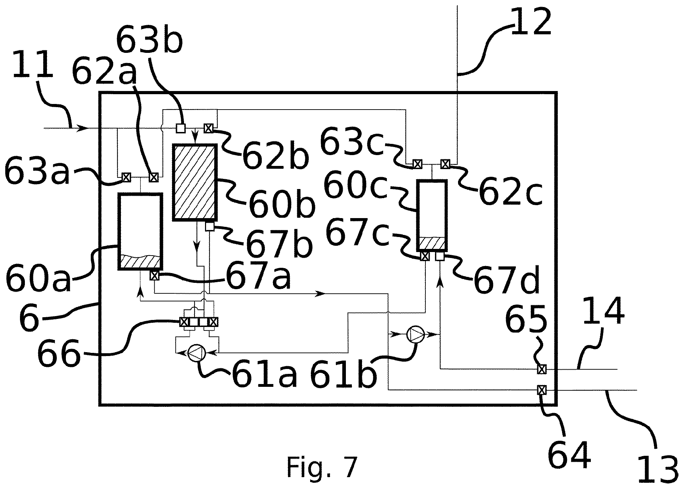

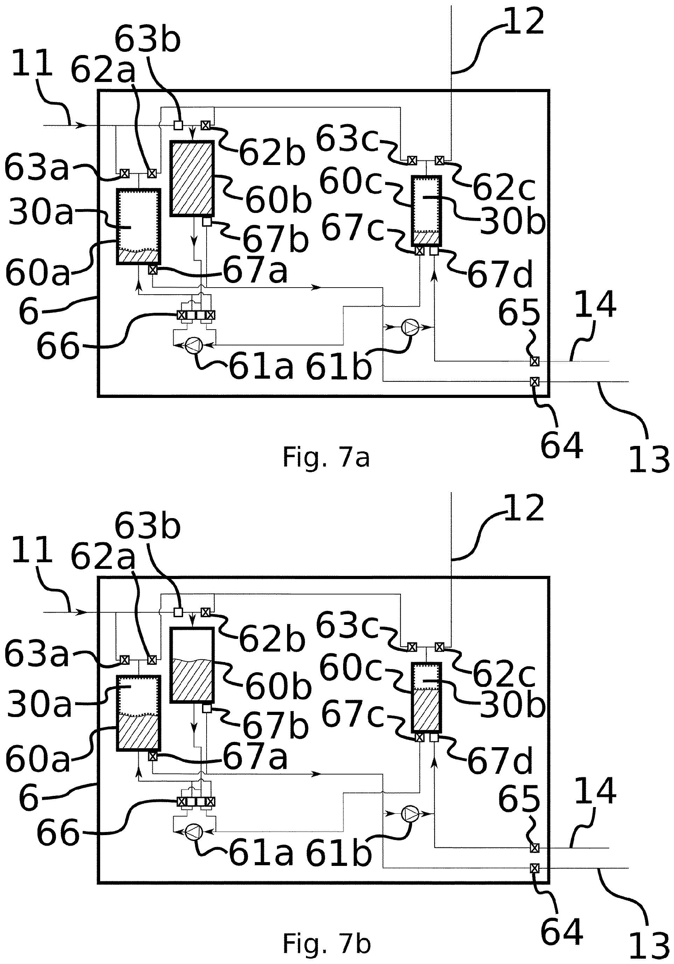

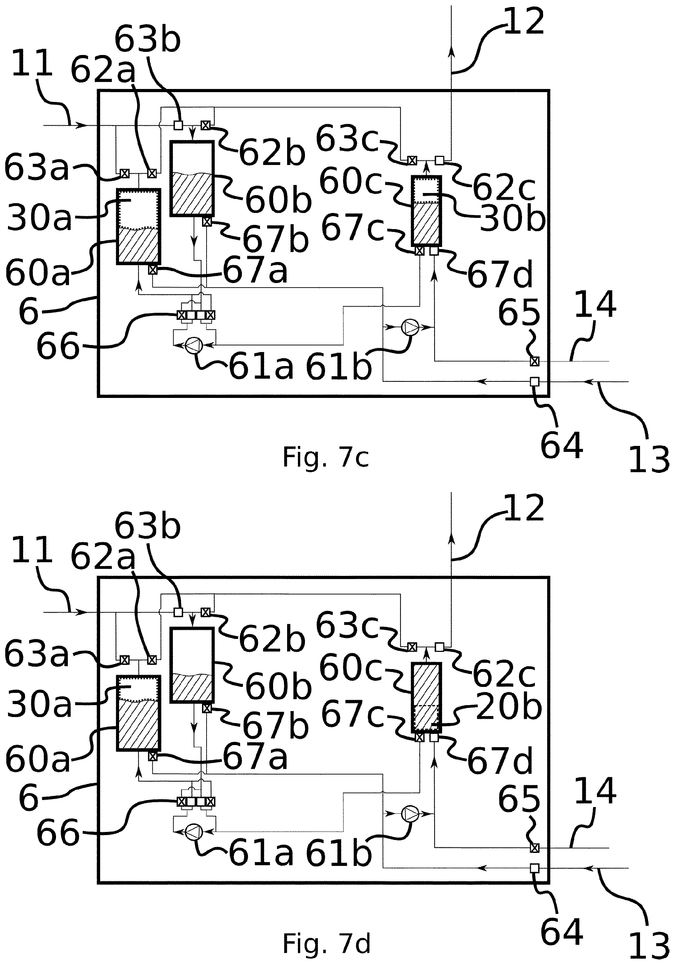

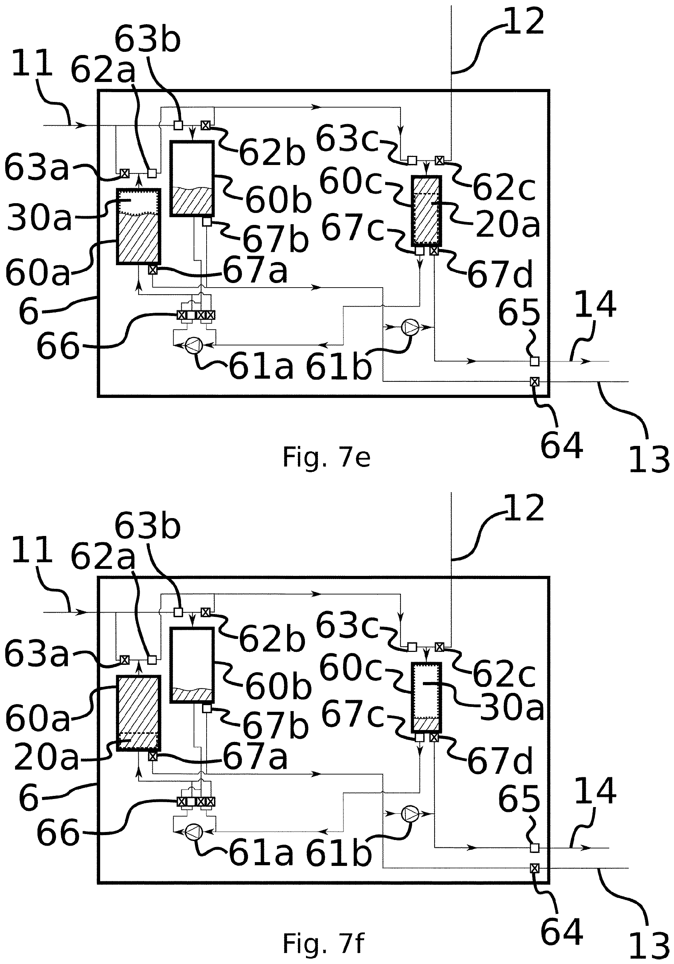

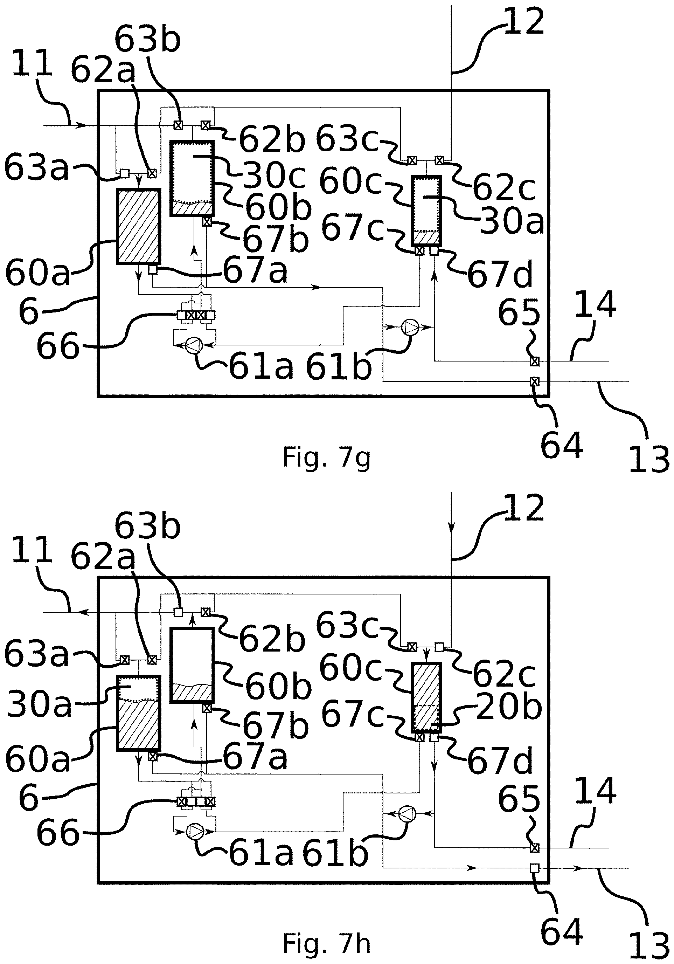

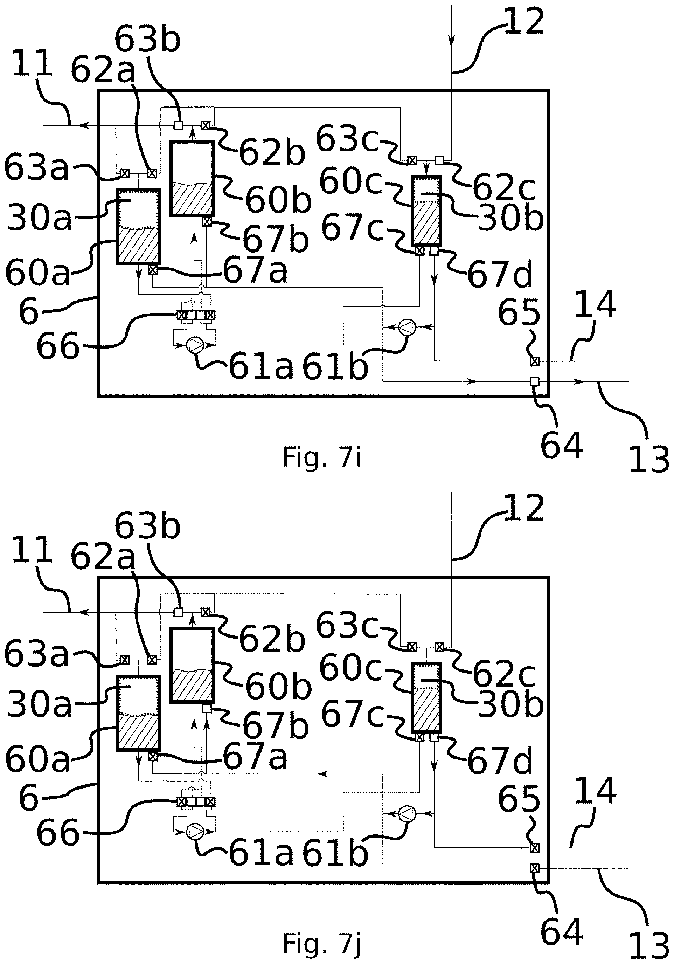

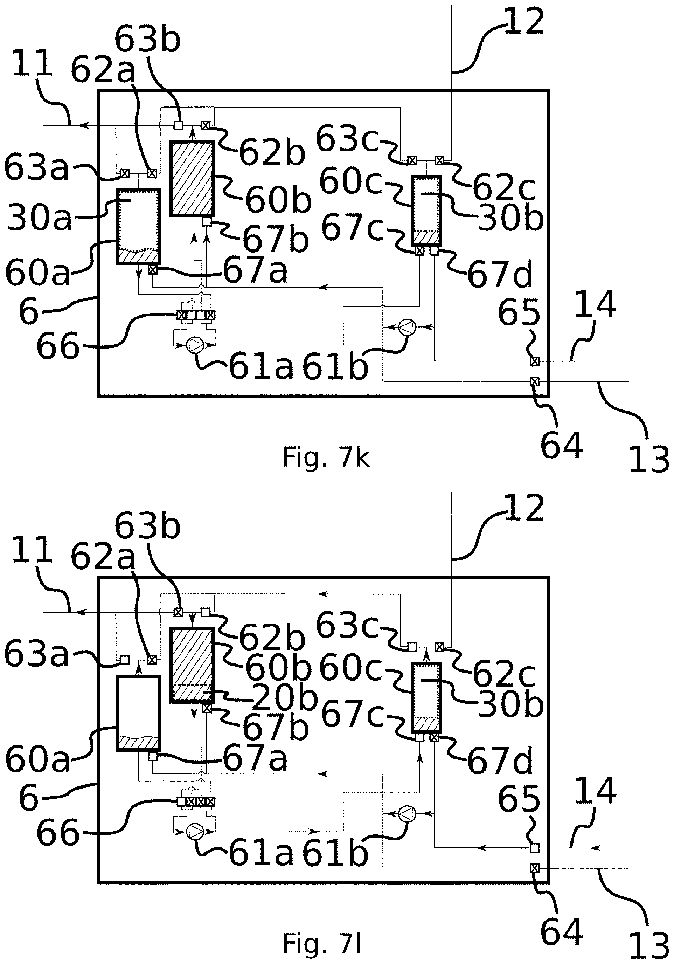

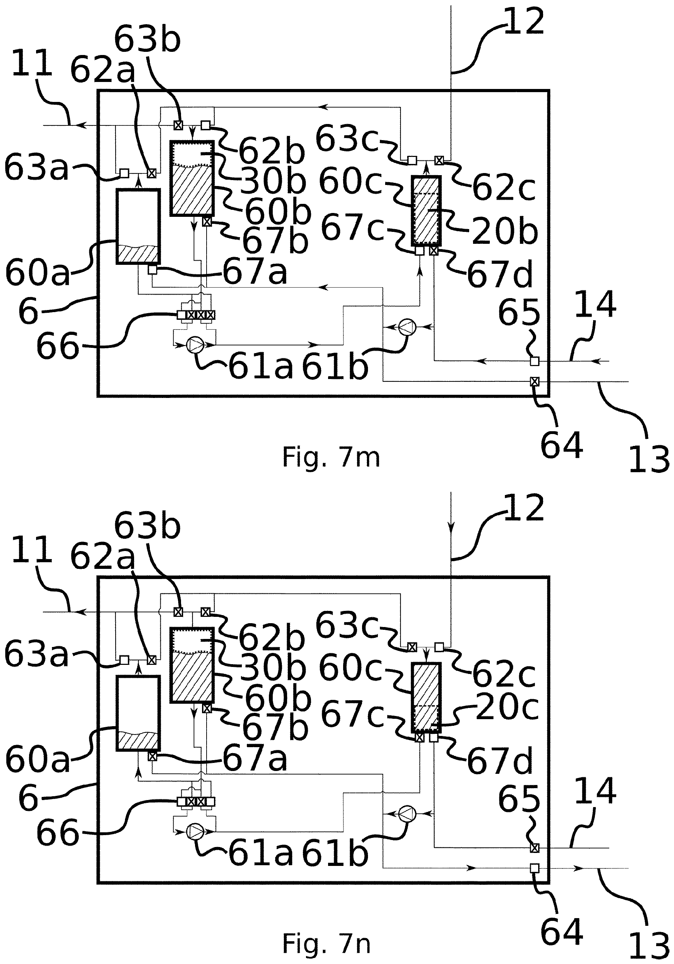

Fig. 7    eine mögliche parallele und serielle Ausführungsform von Verschiebebehältern und Flüssigkeitspumpen als Verschiebemechanismen 61a und 61b, wobei der Verschiebevorgang zwischen der zweiten Stufe und dem Druckspeicher 1 aber auch zwischen der ersten Stufe und der zweiten Stufe angewendet wird;

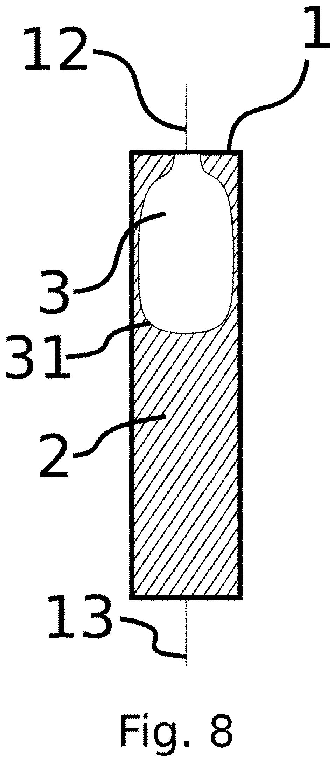

Fig. 8    eine Trennvorrichtung 31, um sich im Druckspeicher 1 befindliche Flüssigkeit 2 von dem verdichteten Gas 3 zu trennen;

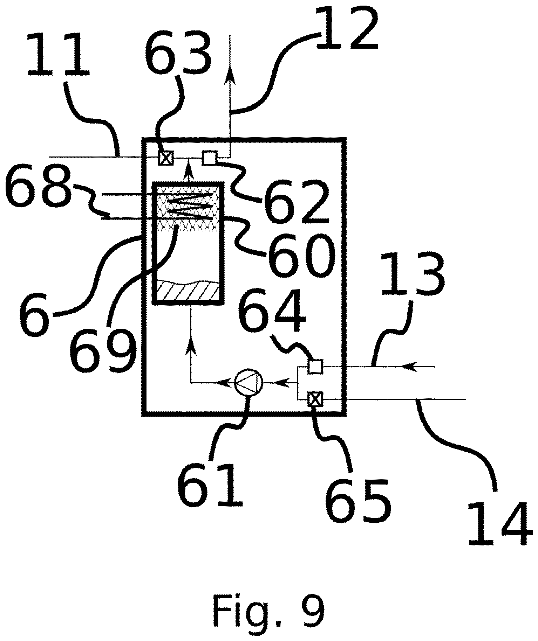

Fig. 9    eine mögliche Anordnung eines Regenerators 69 und/oder eines Wärmetauschers 68 in einem Verschiebebehälter 60;

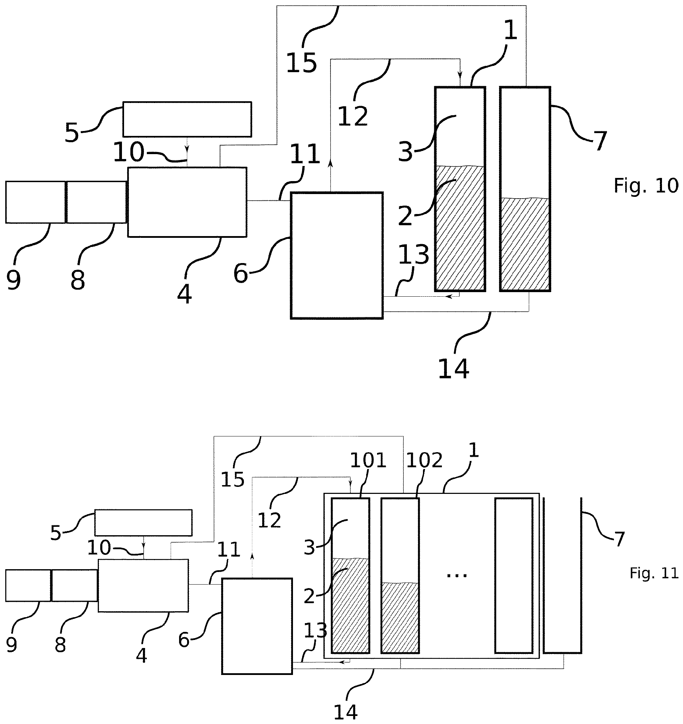

Fig. 10    ein Energiespeichersystem wie in Fig. 1 gezeigt, mit dem Unterschied, dass das Auffangbecken 7 auf ein Druckniveau zwischen dem der Gasquelle/senke 5 und dem des Druckspeichers 1 gebracht wird;

Fig. 11    zu einem Druckspeicher 1 zusammengefasste Druckbehälter 101, 102, ....

Die Fig. 1 zeigt einen Druckspeicher **1**, teilweise mit einer Flüssigkeit **2** (hier Wasser) und verdichtetem Gas **3** gefüllt (hier Luft), wobei das Gas und die Flüssigkeit entweder in direktem Kontakt stehen oder durch eine Vorrichtung getrennt werden (in Fig. 1 nicht dargestellt). Weiter ersichtlich ist eine Arbeitsmaschine **4**, welche fluidisch mit einer Gasquelle/senke **5** (hier die Atmosphäre) verbunden ist und in der Lage ist, Gas aus der Gasquelle **5** zu entnehmen, zu verdichten und mittels der Verschiebevorrichtung **6** in den Druckspeicher **1** zu befördern und/oder Gas mittels der Verschiebevorrichtung **6** aus dem Druckspeicher **1** zu entnehmen, zu expandieren und der Gassenke **5** zuzuführen. Dabei kann die Arbeitsmaschine **4** getrennt aus einem Verdichter und einem Expander und der nötigen Antriebe **8** bzw. Abtriebe **8** bestehen oder aus einem kombinierten Verdichter/Expander, welcher ein Gas sowohl verdichten aber auch expandieren kann, wobei die Arbeitsmaschine **4** auch mehrstufig aufgebaut sein kann. Der Antrieb **8** bzw. Abtrieb **8** der Arbeitsmaschine **4** ist beispielsweise ein E-Motor bzw. Generator, welcher mit dem elektrischen Netz **9** verbunden ist. Beim Verdichten von Gas wird Strom aus dem Netz **9** bezogen und beim Expandieren von Gas wird Strom in das Netz **9** eingespeist.

Die Verschiebevorrichtung **6** ist dadurch gekennzeichnet, dass gasseitig eine fluidische Verbindung **11, 12** zur Arbeitsmaschine **4** und/oder dem Druckspeicher **1** hergestellt werden kann und das flüssigkeitsseitig eine fluidische Verbindung **13, 14** zum Druckspeicher **1** und/oder dem Auffangbecken **7** hergestellt werden kann, und zwar so, dass es möglich ist, Flüssigkeit in oder aus dem Druckspeicher **1** oder dem Auffangbecken **7** zu befördern und im gleichen Zug Gas, welches sich in der Verschiebevorrichtung **6** oder dem Druckspeicher **1** befindet, zu verschieben, zu verdichten oder zu entspannen.

Durch das Verschieben von Flüssigkeit aus dem Druckspeicher **1** oder dem Auffangbecken **7** in die Verschiebevorrichtung **6** hinein kann das sich in der Verschiebevorrichtung **6** befindliche Gas in den Druckspeicher **1** oder in die Arbeitsmaschine **4** verschoben werden und/oder das Gas kann mittels der Verschiebevorrichtung **6** verdichtet werden, je nachdem, ob für das Gas in der Verschiebevorrichtung **6** eine fluidische Verbindung **11, 12** zur Arbeitsmaschine **4** oder zum Druckspeicher **1** besteht oder ob die Verbindungen **11, 12** unterbrochen sind. Die Flussrichtungen der durch die Verschiebevorrichtung **6** und/oder durch die Arbeitsmaschine **4** erzeugten Strömungen durch die fluidischen Verbindungen **10, 11, 12, 13, 14** hindurch sind mit Pfeilen dargestellt.

Durch das Verschieben von Flüssigkeit aus der Verschiebevorrichtung **6** in den Druckspeicher **1** oder in das Auffangbecken **7** hinein kann Gas aus dem Druckspeicher **1** oder aus der Arbeitsmaschine **4** in die Verschiebevorrichtung **6** angesaugt werden bzw. nachrücken und/oder das Gas in der Verschiebevorrichtung **6** kann durch die Verschiebevorrichtung **6** entspannt werden, je nachdem, ob für das Gas im Verschiebebehälter eine fluidische Verbindung **11, 12** zur Arbeitsmaschine **4** oder zum Druckspeicher **1** besteht oder ob die Verbindungen **11, 12** unterbrochen sind.

Bei einer bestehenden fluidischen Verbindung **11** der Verschiebevorrichtung **6** zur Arbeitsmaschine **4** kann auch eine Verbindung zur Gasquelle/senke **5** bestehen oder zu Gas, welches sich auf einem Druckniveau zwischen dem des Druckspeichers **1** und dem der Gasquelle/senke **5** befindet oder zu Gas, welches sich auf dem oder über dem Druckniveau des Druckspeichers **1** befindet oder allgemein zu Gas, welches sich auf einem beliebigen Druckniveau befindet.

Die Anordnung von Fig. 1 erlaubt es, über das Stromnetz **9** die Arbeitsmaschine **4** anzutreiben, um Gas zu verdichten und mit dem verdichteten Gas die Verschiebevorrichtung **6** zu beschicken, in welcher das zugelieferte Gas entweder verdichtet und in den Druckspeicher **1** verschoben werden kann oder aus welcher das zugelieferte Gas ohne weitere Verdichtung des Gases in den Druckspeicher **1** verschoben werden kann. Erfindungsgemäss kann beim Verschieben des verdichteten Gases aus der Verschiebevorrichtung **6** in den Druckspeicher **1** hinein der Druck im Druckspeicher **1** bzw. das Gasspeichervolumen im Druckspeicher **1** kontrolliert werden, indem die durch die Verschiebevorrichtung **6** verschobene Flüssigkeit für den Verschiebevorgang und/oder Verdichtungsvorgang entweder dem Druckspeicher **1** oder dem Auffangbecken **7** entnommen wird.

Die Anordnung von Fig. 1 erlaubt es auch, verdichtetes Gas aus dem Druckspeicher **1** in die Verschiebevorrichtung **6** zu verschieben und/oder in diese hinein expandieren zu lassen, um verdichtetes Gas entweder zu entspannen und dann der Arbeitsmaschine **4** zur weiteren Entspannung zur Verfügung zu stellen oder verdichtetes Gas ohne vorgängige Entspannung der Arbeitsmaschine **4** zur Entspannung zur Verfügung zu stellen, welche wiederum einen Generator **8** antreibt, womit Strom in das Netz **9** eingespeist wird. Erfindungsgemäss kann beim Verschieben des verdichteten Gases aus dem Druckspeicher **1** in die Verschiebevorrichtung **6** hinein der Druck im Druckspeicher **1** bzw. das Gasspeichervolumen im Druckspeicher **1** kontrolliert werden, indem Flüssigkeit aus der Verschiebevorrichtung **6** entweder in den Druckspeicher 1 oder in das Auffangbecken **7** hinein verschoben wird.

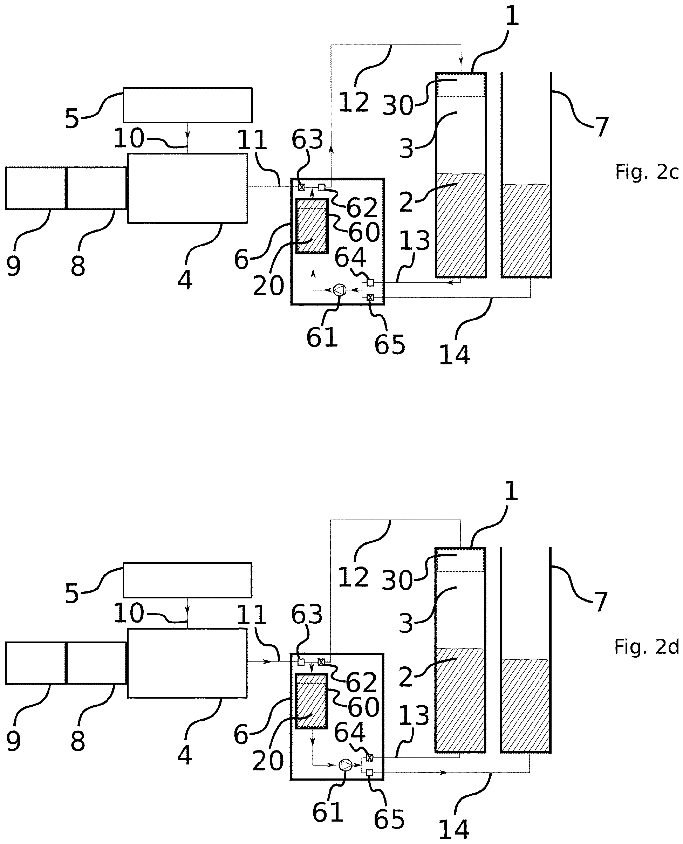

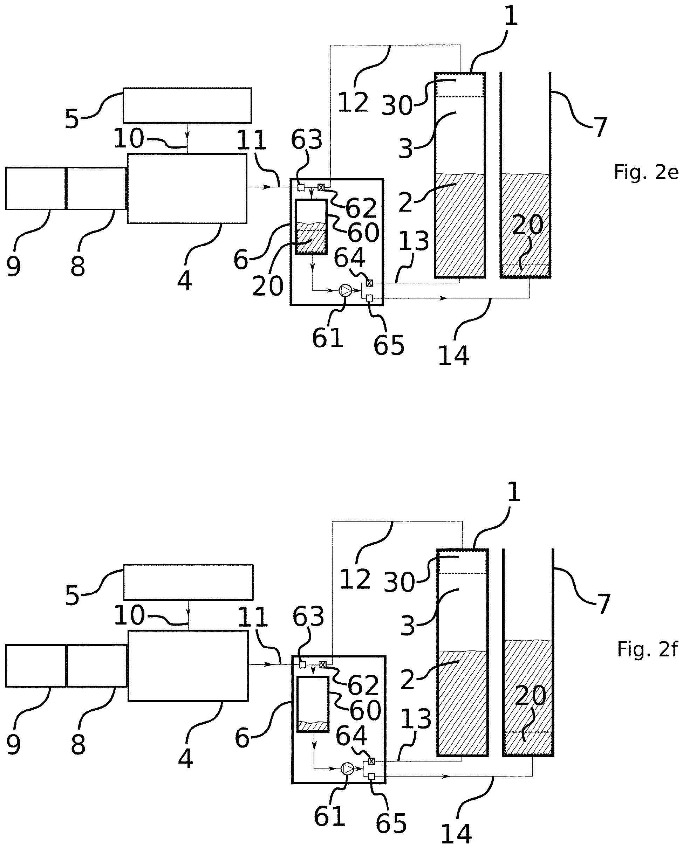

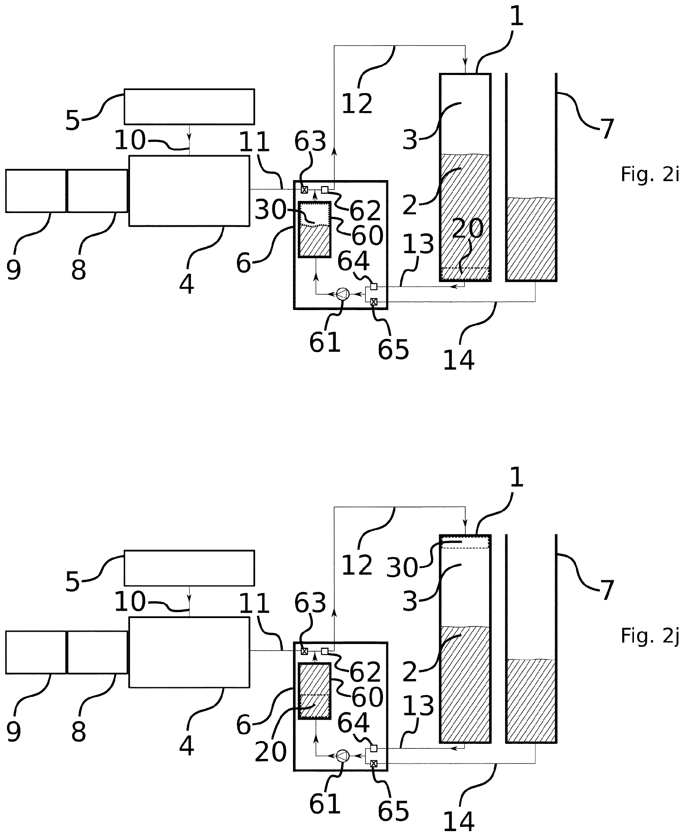

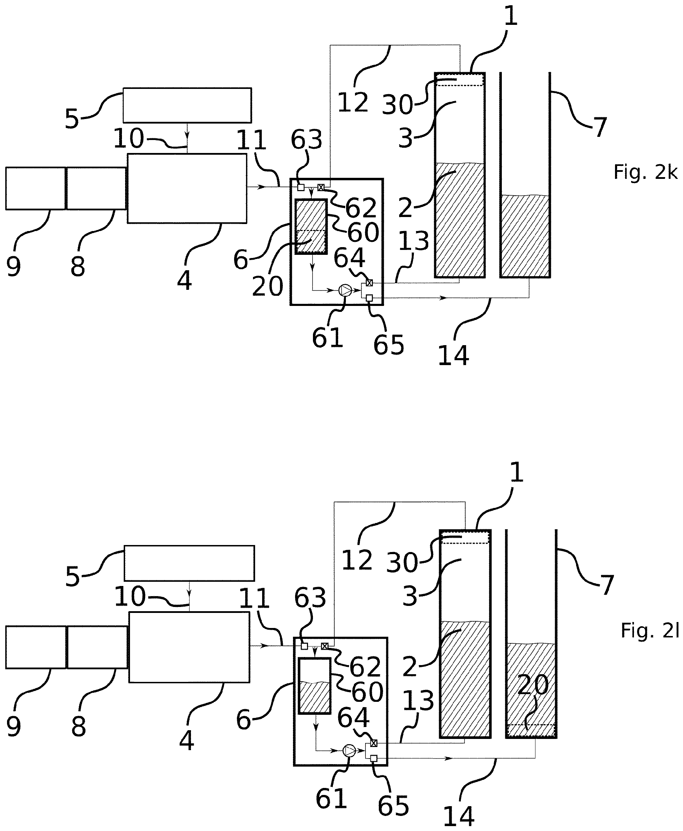

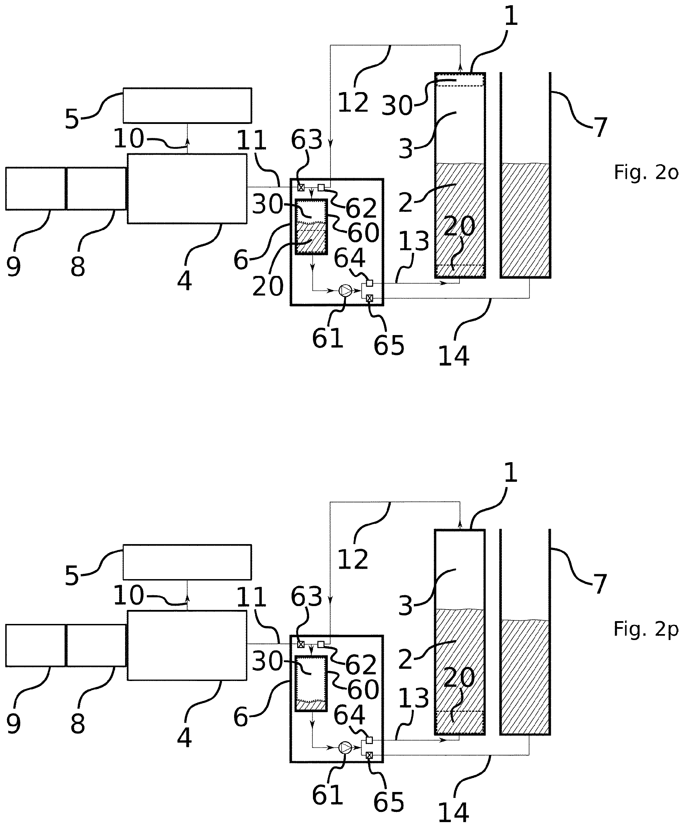

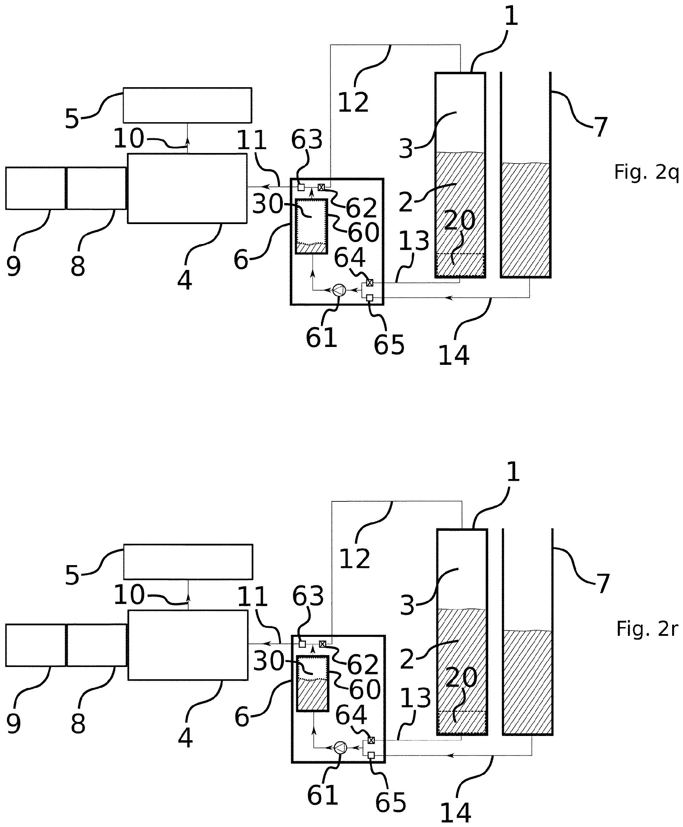

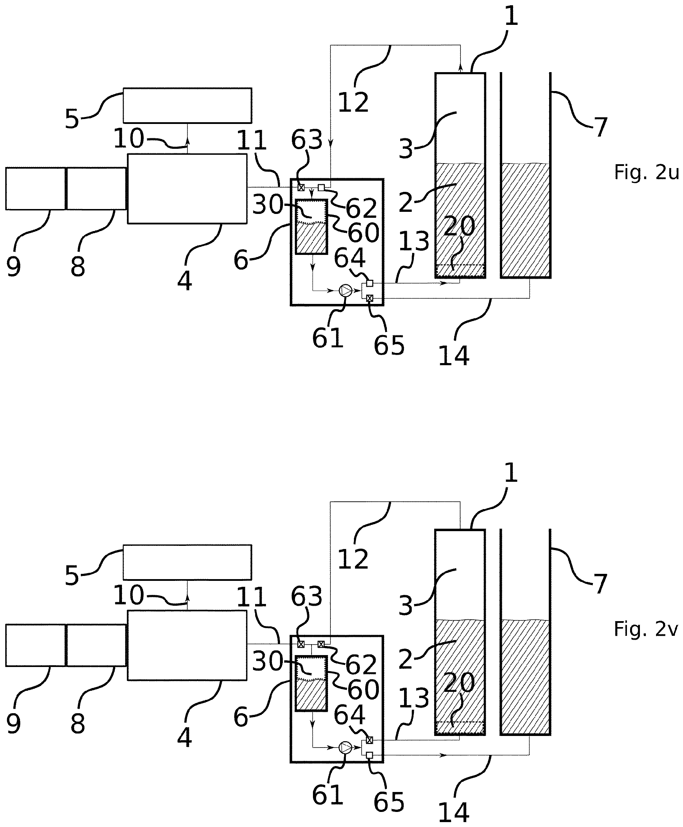

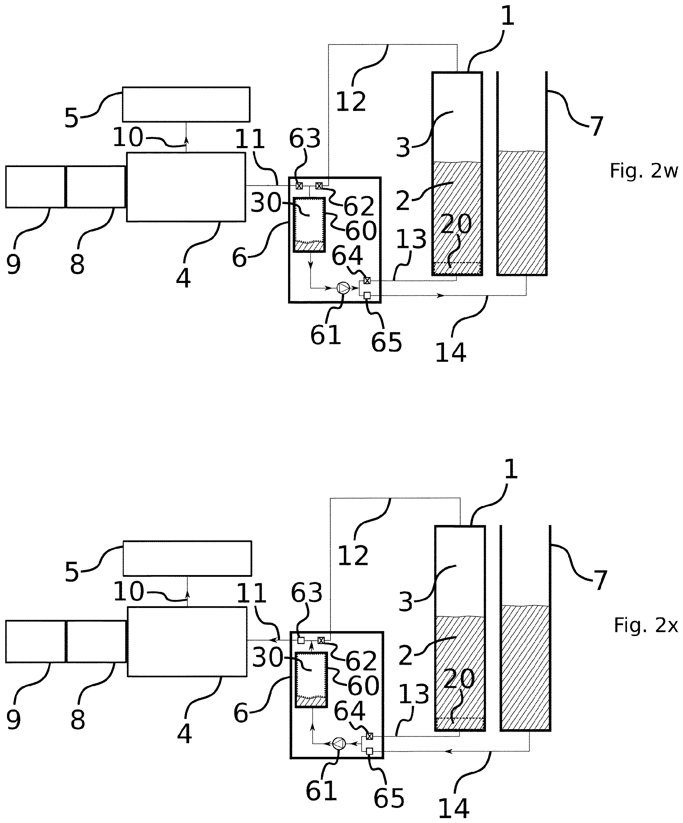

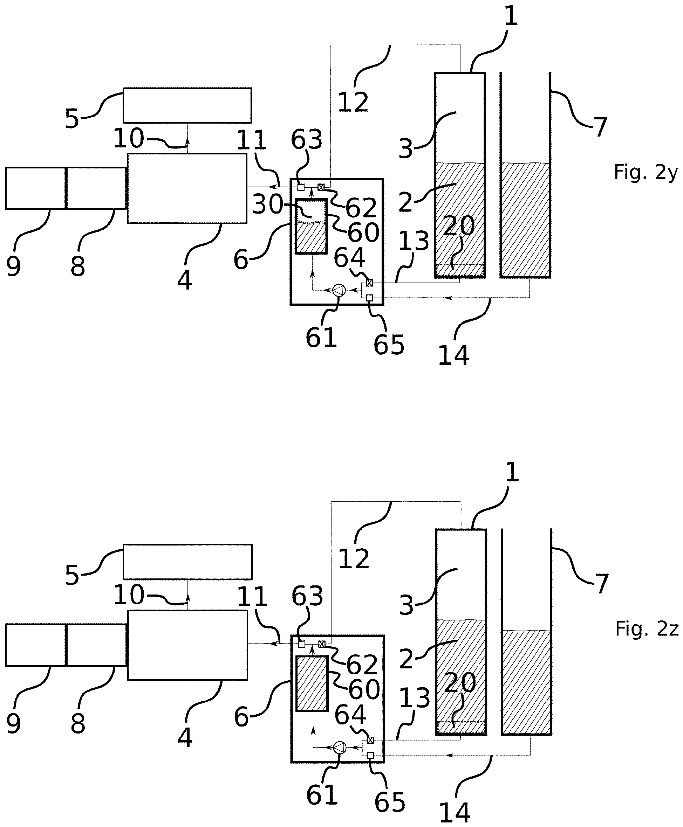

Die Fig. 2 zeigt eine mögliche Ausführungsform der Verschiebevorrichtung **6**, bestehend aus einem Verschiebebehälter **60**, zur Bereitstellung eines Verschiebevolumens, wobei dieses Volumen von einem eigenständigen Behälter bereitgestellt sein kann, aber auch in die Arbeitsmaschine **4** integriert sein kann, oder als Leitungsvolumen zwischen der Arbeitsmaschine **4** und dem Druckspeicher **1** vorhanden sein kann. Weiter schliesst die Verschiebevorrichtung einen Verschiebemechanismus **61** ein, welcher hier exemplarisch als eine Flüssigkeitspumpe **61** ausgeführt ist, wobei generell die Flüssigkeitspumpe **61** nur die Fliessrichtung anzeigt und nicht ob verdichtet oder entspannt wird, und Ventile **62, 63, 64, 65** aufweist, welche es erlauben, eine fluidische Verbindung **11, 12, 13, 14** zwischen der Verschiebevorrichtung **6** und der Arbeitsmaschine **4**, dem Druckspeicher **1** und/oder dem Auffangbecken **7** herzustellen [ ] oder zu unterbrechen [X]. Im Folgenden wird generell nicht explizit darauf eingegangen, welche Ventile zu welchem Zeitpunkt eine fluidische Verbindung herstellen oder unterbrechen, da dies aus den Figuren ersichtlich ist und eine hergestellte fluidische Verbindung auch durch die Fliessrichtung des Fluides gekennzeichnet ist.

An dieser Stelle ist auch zu erwähnen, dass der Verschiebemechanismus **61** natürlich auch angetrieben oder gebremst werden muss, und dass dies auf verschiedene Arten geschehen kann, beispielsweise durch eine mechanische Verbindung zur Arbeitsmaschine und deren An- und Abtrieb, oder durch einen separaten An- bzw. Abtrieb. Diese mechanische Verbindung bzw. dieser An- und Abtrieb sind in den Fig. 2 und 2a bis 2z nicht eingezeichnet, da die Flüssigkeitspumpe **61** nur exemplarisch als Verschiebemechanismus **61** verwendet wird. Im Folgenden sei generell anzunehmen, dass dem Verschiebemechanismus **61** (hier Flüssigkeitspumpe) sowohl eine Antriebswie auch Abtriebsleistung zur Verfügung steht und dass bei Bedarf weitere Ventile oder Einrichtungen benutzt werden können, um beispielsweise die Wirkrichtung des Verschiebemechanismus **61** umzukehren oder dessen Wirkung teilweise oder ganz aufzuheben bzw. einzustellen.

Die verschiedenen Betriebsmodi, welche sich aus der Anordnung von Fig. 2 ergeben, werden anhand der Fig. 2a bis 2z erklärt, wobei die Darstellungen zu verschiedenen Zeitpunkten die Zustände bzw. die aktuellen Vorgänge im System beschreiben und schematisch zu verstehen sind.

Der Vorgang, welcher mit Fig. 2a bis 2f aufgezeigt ist, wird im Weiteren als "Kompressionsmodus ohne Nachverdichten" betitelt. Der Kompressionsmodus wird daran erkannt, dass die Strömungsrichtung des Gases (zumindest im Zeitmittel) von der Gasquelle **5** zur Arbeitsmaschine **4** hinzeigt. Das heisst die Arbeitsmaschine **4** wird zum Verdichten von Gas angetrieben und es wird hierfür Strom aus dem Netz **9** bezogen. In Fig. 2a ist der Anfang eines Verschiebevorgangs zu sehen, indem eine verdichtete Einheit Gas **30**, welche sich im Verschiebebehälter **60** befindet, in den Druckspeicher **1** verschoben wird. Dies geschieht dadurch, dass die Flüssigkeitspumpe **61** eine Einheit Flüssigkeit **20** aus dem Druckspeicher **1** in den Verschiebebehälter **60** hineinpumpt bzw. verschiebt und dort der Flüssigkeitspegel steigt und folglich die Einheit verdichtetes Gas **30** in den Druckspeicher **1** drückt, wo die Einheit verdichtetes Gas **30** das frei gewordene Volumen der eben dem Druckspeicher **1** entnommenen Einheit Flüssigkeit **20** einnimmt. Dieser Vorgang ist in Fig. 2a bis 2c mit drei aufeinander folgenden Zeitschritten dargestellt. Da sich die Einheit Flüssigkeit **20** und die Einheit verdichtetes Gas **30** bei diesem Vorgang auf dem Druckniveau des Druckspeichers **1** befinden, muss die Flüssigkeitspumpe **61** nur eine geringe Leistung (z.B. Strömungsverluste, Gravitationskräfte, Auftriebskräfte) aufbringen, um die Einheit Flüssigkeit **20** und somit die Einheit verdichtetes Gas **30** in einer gewissen Zeit zu verschieben.

In Fig. 2d bis 2f ist die zeitliche Fortsetzung des Vorgangs von Fig. 2a bis 2c gezeigt, indem die sich im Verschiebebehälter befindliche Einheit Flüssigkeit **20** aus dem Verschiebebehälter **60** in das Auffangbecken **7** hinein verschoben wird. Hierfür wird die fluidische Verbindung **12** des Verschiebebehälters **60** mit dem Druckspeicher 1 unterbrochen und die fluidische Verbindung **11** zwischen der Arbeitsmaschine **4** und dem Verschiebebehälter **60** hergestellt, damit Gas aus der Arbeitsmaschine **4** in den Verschiebebehälter **60** einströmen kann bzw. angesaugt werden kann. Des Weiteren wird die fluidische Verbindung **14** zwischen dem Verschiebebehälter **60** und dem Auffangbecken **7** hergestellt, damit der Verschiebemechanismus **61** die Einheit Flüssigkeit **20** aus dem Verschiebebehälter **60** in das Auffangbecken **7** verschieben kann. Dabei ist es relevant, auf welchem Druckniveau das Gas von der Arbeitsmaschine **4** in den Verschiebebehälter **60** nachströmt bzw. angesaugt wird. Geschieht dies mit Gas, welches sich beispielsweise auf dem Druckniveau der Gasquelle **5** befindet und sich die Flüssigkeit im Auffangbecken **7** ebenfalls auf dem Druckniveau der Gasquelle **5** befindet, dann muss die Flüssigkeitspumpe **61** wiederum nur eine geringe Leistung (z.B. Strömungsverluste, Gravitationskräfte, Auftriebskräfte) aufbringen, um die Einheit Flüssigkeit **20** in einer gewissen Zeit vom Verschiebebehälter **60** in das Auffangbecken **7** zu pumpen. Je höher bei diesem Vorgang der Druckunterschied zwischen der Flüssigkeit im Verschiebebehälter **60** und der Flüssigkeit im Auffangbecken **7** ist, desto mehr Leistung muss von der Flüssigkeitspumpe **61** aufgebracht werden, um die Flüssigkeit zu pumpen (verdichten) oder zu bremsen (entspannen), je nachdem, ob im Auffangbecken **7** oder im Verschiebebehälter **60** das Druckniveau höher ist. Falls sich das Gas, welches sich im Verschiebebehälter **60** befindet (wie in Fig. 2f gezeigt) noch nicht auf dem gewünschten Druckniveau befindet, kann die Arbeitsmaschine **4** weiterhin Gas in den Verschiebebehälter **60** befördern, ohne dass Flüssigkeit verschoben wird, bis das im Verschiebebehälter **60** befindliche Gas das gewünschte Druckniveau erreicht hat und sich eine weitere Einheit verdichtetes Gas **30** zur Einbringung in den Druckspeicher **1** im Verschiebebehälter **60** befindet.

Danach wird die fluidische Verbindung **11** zwischen der Arbeitsmaschine **4** und dem Verschiebebehälter **60** unterbrochen und die fluidische Verbindung **12** zwischen dem Verschiebebehälter **60** und dem Druckspeicher **1** wird hergestellt und der Zyklus beginnt mit verändertem Inhalt des Druckspeichers **1** wieder mit dem Zustand nach Fig. 2a, wobei die sich im Verschiebebehälter **60** befindliche Einheit verdichtetes Gas **30** in den Druckspeicher **1** verschoben wird. Wenn sich die Einheit verdichtetes Gas **30** im Verschiebebehälter **60** vor dem Herstellen der fluidischen Verbindung **12** zwischen dem Druckspeicher **1** und dem Verschiebebehälter **60** auf dem Druckniveau des Druckspeichers **1** befunden hat, wird beim Wiederholen des Verschiebevorganges (Fig. 2a bis 2f) das Druckniveau des Druckspeichers **1** konstant bleiben. Wenn sich die Einheit verdichtetes Gas **30** vor dem Herstellen der fluidischen Verbindung **12** zwischen dem Druckspeicher **1** und dem Verschiebebehälter **60** auf einem tieferen Druckniveau befindet als das Druckniveau des Druckspeichers **1**, dann wird das Druckniveau des Druckspeichers **1** sinken. Wenn sich die Einheit verdichtetes Gas **30** vor dem Herstellen der fluidischen Verbindung **12** zwischen dem Druckspeicher **1** und dem Verschiebebehälter **60** auf einem höheren Druckniveau befindet als das Druckniveau des Druckspeichers **1**, dann wird das Druckniveau des Druckspeichers **1** steigen. Somit kann das Druckniveau des Druckspeichers **1** während der Befüllung mit verdichtetem Gas (unabhängig vom Füllstand des Druckspeichers **1**) kontrolliert werden. Dabei wird die Einheit verdichtetes Gas **30** im Verschiebebehälter **60** durch eine Pegeländerung der Flüssigkeit im Verschiebebehälter **60** nicht oder nur wenig verdichtet. Deshalb heisst dieser Betriebsmodus "Kompressionsmodus ohne Nachverdichten".

Der Vorgang, welcher mit Fig. 2g bis 2m gezeigt ist, wird im Weiteren als "Kompressionsmodus mit Nachverdichten" betitelt. Der Kompressionsmodus wird daran erkannt, dass die Strömungsrichtung des Gases (zumindest im Zeitmittel) von der Gasquelle **5** zur Arbeitsmaschine **4** hinzeigt. Das heisst, die Arbeitsmaschine **4** wird zum Verdichten von Gas angetrieben und es wird Strom aus dem Netz **9** bezogen. Der Unterschied zum "Kompressionsmodus ohne Nachverdichten" besteht darin, dass eine von der Arbeitsmaschine **4** verdichtete Einheit Gas **30**, welche sich im Verschiebebehälter **60** befindet, durch den steigenden Flüssigkeitspegel im Verschiebebehälter **60** nicht nur in den Druckspeicher **1** verschoben wird, sondern auch verdichtet werden kann. Dies wird erreicht, indem mittels der Flüssigkeitspumpe **61** Flüssigkeit aus dem Auffangbecken **7** in den Verschiebebehälter **60** hinein verschoben wird, wie in Fig. 2g und 2h dargestellt, wobei die Einheit verdichtetes Gas **30** im Verschiebebehälter **60** eingeschlossen ist, d.h. gasseitig besteht keine fluidische Verbindung **11,12** zwischen dem Verschiebebehälter **60** und dem Druckspeicher **1** oder der Arbeitsmaschine **4**. Bei Erreichen des gewünschten Druckniveaus im Verschiebebehälter **60** kann die fluidische Verbindung **14** zwischen dem Auffangbecken **7** und dem Verschiebebehälter **60** unterbrochen werden, und eine fluidische Verbindung **12** zwischen dem Verschiebebehälter **60** und dem Druckspeicher **1** kann hergestellt werden. In Fig. 2i bis 2m ist der darauffolgende Verschiebevorgang gezeigt, wobei die sich im Verschiebebehälter **60** befindliche nachverdichtete Einheit Gas **30** in den Druckspeicher **1** eingebracht wird und anschliessend die Einheit Flüssigkeit **20** und die Menge an Flüssigkeit für das Nachverdichten in das Auffangbecken **7** befördert wird.

Dieser Vorgang ist im Prinzip identisch mit jenem nach dem Betriebsmodus "Kompressionsmodus ohne Nachverdichten" (2b bis 2f) und wird nicht weiter erläutert.

Je nach Anwendungsfall kann der Verschiebebehälter **60** direkt mit der Gasquelle **5** verbunden sein und der Verschiebemechanismus **61** mit dem Antrieb **8** der Arbeitsmaschine **4** versehen werden, damit keine Arbeitsmaschine **4** zum Vorverdichten nötig ist. Im Folgenden kann vom "Kompressionsmodus mit Nachverdichten" die Rede sein, auch wenn die Verschiebevorrichtung **6** zur Entnahme von Gas aus der Gasquelle **5** und zur Verdichtung ebendieses Gases verwendet wird, ohne im Druckspeichersystem eine Arbeitsmaschine **4** zu verwenden.

Der Vorgang, welcher mit den Fig. 2n bis 2s gezeigt ist, wird im Weiteren als "Expansionsmodus ohne Vorentspannung" betitelt. Der Expansionsmodus wird daran erkannt, dass die Strömungsrichtung des Gases (zumindest im Zeitmittel) von der Arbeitsmaschine **4** zur Gassenke **5** hinzeigt. Das heisst, die Arbeitsmaschine **4** entspannt verdichtetes Gas und treibt den Generator **8** an, wobei Strom in das Netz **9** eingespeist wird. In Fig. 2n ist der Anfang eines Verschiebevorgangs zu sehen, wo eine verdichtete Einheit Gas **30**, welche sich im Druckspeicher **1** befindet, in den Verschiebebehälter **60** verschoben wird. Dies geschieht dadurch, dass die Flüssigkeitspumpe **61** Flüssigkeit aus dem Verschiebebehälter **60** in den Druckspeicher **1** hinein verschiebt und dort der Flüssigkeitspegel steigt und folglich verdichtetes Gas über die fluidische Verbindung **12** in den Verschiebebehälter **60** drückt, wo die Einheit verdichtetes Gas **30** den Platz der eben dem Druckspeicher **1** zugeführten Einheit Flüssigkeit **20** einnimmt. Dieser Vorgang ist in Fig. 2n bis 2p mit drei aufeinander folgenden Zeitschritten dargestellt. Da sich die Einheit Flüssigkeit **20** und die Einheit verdichtetes Gas **30** bei diesem Vorgang auf dem Druckniveau des Druckspeichers **1** befinden, muss die Flüssigkeitspumpe **61** nur eine geringe Leistung (z.B. Strömungsverluste, Gravitationskräfte, Auftriebskräfte) aufbringen, um die Einheit Flüssigkeit **20** und somit die Einheit verdichtetes Gas **30** in einer gewissen Zeit zu verschieben.

In Fig. 2q bis 2s ist die zeitliche Fortsetzung des Vorgangs in Fig. 2n bis 2p gezeigt, indem sich im Auffangbecken 7 befindliche Flüssigkeit 20 aus dem Auffangbecken 7 in den Verschiebebehälter 60 hinein verschoben wird. Hierfür wird die fluidische Verbindung 12 des Verschiebebehälters 60 mit dem Druckspeicher 1 unterbrochen und die fluidische Verbindung 11 zwischen der Arbeitsmaschine 4 und dem Verschiebebehälter 60 hergestellt, damit Gas aus dem Verschiebebehälter 60 in die Arbeitsmaschine 4 einströmen kann bzw. angesaugt werden kann. Des Weiteren wird die fluidische Verbindung 14 zwischen dem Verschiebebehälter 60 und dem Auffangbecken 7 hergestellt, damit der Verschiebemechanismus 61 Flüssigkeit aus dem Auffangbecken 7 in den Verschiebebehälter 60 verschieben kann. Dabei ist es relevant, auf welchem Druckniveau sich das Gas in dem Verschiebebehälter 60 befindet. Befindet sich das Gas im Verschiebebehälter 60 beispielsweise auf dem Druckniveau der Gasquelle 5 und die Flüssigkeit im Auffangbecken 7 befindet sich ebenfalls auf dem Druckniveau der Gasquelle 5, dann muss die Flüssigkeitspumpe 61 wiederum nur eine geringe Leistung (z.B. Strömungsverluste, Gravitationskräfte, Auftriebskräfte) aufbringen, um die Flüssigkeit in einer gewissen Zeit vom Auffangbecken 7 in den Verschiebebehälter 60 zu pumpen. Je höher bei diesem Vorgang der Druckunterschied zwischen der Flüssigkeit im Verschiebebehälter 60 und der Flüssigkeit im Auffangbecken 7 ist, desto mehr Leistung muss von der Flüssigkeitspumpe 61 aufgebracht werden, um die Flüssigkeit zu pumpen oder zu bremsen, je nachdem, ob im Auffangbecken 7 oder im Verschiebebehälter 60 das Druckniveau höher ist. Falls sich das Gas, welches sich im Verschiebebehälter 60 befindet (wie in Fig. 2q gezeigt), noch nicht auf dem gewünschten Druckniveau befindet, kann die Arbeitsmaschine 4 zuerst Gas aus dem Verschiebebehälter 60 entspannen, ohne dass Flüssigkeit verschoben wird, bis das im Verschiebebehälter 60 befindliche Gas das gewünschte niedrigere Druckniveau erreicht hat.

Nach dem Erreichen des Zustandes wie in Fig. 2s gezeigt, wird die fluidische Verbindung 11 zwischen der Arbeitsmaschine 4 und dem Verschiebebehälter 60 unterbrochen und die fluidische Verbindung 12 zwischen dem Verschiebebehälter 60 und dem Druckspeicher 1 wird geöffnet und der Zyklus beginnt, mit verändertem Inhalt des Druckspeichers 1, wieder mit dem Zustand nach Fig. 2n, wobei erneut eine sich im Druckspeicher 1 befindliche Einheit verdichtetes Gas 30 in den Verschiebebehälter 60 verschoben wird. Während der Entnahme von verdichtetem Gas bleibt das Druckniveau des Druckspeichers 1 konstant, wobei die Einheit verdichtetes Gas 30 im Verschiebebehälter 60 durch eine Pegeländerung der Flüssigkeit im Verschiebebehälter 60 nicht oder nur wenig entspannt oder verdichtet wird. Deshalb heisst dieser Betriebsmodus "Expansionsmodus ohne Vorentspannung".

Der Vorgang, welcher mit Fig. 2t bis 2z beschrieben ist, wird im Weiteren als "Expansionsmodus mit Vorentspannung" betitelt. Der Expansionsmodus wird daran erkannt, dass die Strömungsrichtung des Gases (zumindest im Zeitmittel) von der Arbeitsmaschine 4 zur Gassenke 5 hinzeigt. Das heisst, die Arbeitsmaschine 4 entspannt verdichtetes Gas und treibt den Generator 8 an, wobei Strom in das Netz 9 eingespeist wird. Der Unterschied zum "Expansionsmodus ohne Vorentspannung" besteht darin, dass eine dem Druckspeicher 1 entnommene verdichtete Einheit Gas 30 (wie in Fig. 2t bis 2u gezeigt), welche sich im Verschiebebehälter 60 befindet, durch den sinkenden Flüssigkeitspegel im Verschiebebehälter 60 nicht nur verschoben wird, sondern auch entspannt werden kann. Dies wird erreicht, indem mittels der Flüssigkeitspumpe 61 Flüssigkeit aus dem Verschiebebehälter 60 in das Auffangbecken 7 hinein verschoben wird, wie in Fig. 2v und 2w dargestellt, wobei die Einheit verdichtetes Gas 30 im Verschiebebehälter 60 eingeschlossen ist, d.h. gasseitig besteht keine fluidische Verbindung 11, 12 zwischen dem Verschiebebehälter 60 und dem Druckspeicher 1 oder der Arbeitsmaschine 4. Bei Erreichen des gewünschten Druckniveaus im Verschiebebehälter 60 kann die fluidische Verbindung 11 zwischen dem Verschiebebehälter 60 und der Arbeitsmaschine 4 hergestellt werden. In Fig. 2x bis 2z ist der darauffolgende Verschiebevorgang gezeigt, wobei die sich im Verschiebebehälter 60 befindliche vorentspannte Einheit Gas 30 in die Arbeitsmaschine 4 verschoben wird. Dieser Vorgang ist im Prinzip identisch mit dem des Betriebsmodus "Expansionsmodus ohne Vorentspannung" (Fig. 2q bis 2s) und wird nicht weiter erläutert.

Bei Bedarf könnte der Vorgang, welcher in Fig. 2t und 2u gezeigt wird, auch mit einer bestehenden fluidischen Verbindung 14 zwischen dem Verschiebebehälter 60 und dem Auffangbecken 7 durchgeführt werden, anstelle einer bestehenden fluidischen Verbindung 13 zwischen dem Verschiebebehälter 60 und dem Druckspeicher 1. In diesem Fall würde das Druckniveau im Druckspeicher 1 sinken. Oder der Vorgang, wie in Fig. 2v und 2w dargestellt, wird mit einer bestehenden fluidischen Verbindung 13 zwischen dem Verschiebebehälter 60 und dem Druckspeicher 1 durchgeführt, anstelle einer bestehenden fluidischen Verbindung 14 zwischen dem Verschiebebehälter 60 und dem Auffangbecken 7. Dann steigt das Druckniveau im Druckspeicher. Somit kann das Druckniveau des Druckspeichers 1 während der Entnahme von verdichtetem Gas (füllstandunabhängig) kontrolliert werden.

Je nach Anwendungsfall kann der Verschiebebehälter 60 direkt mit der Gasquelle 5 verbunden sein und der Verschiebemechanismus 61 kann mit dem Abtrieb 8 der Arbeitsmaschine 4 versehen werden, damit keine Arbeitsmaschine 4 zum Nachentspannen nötig ist. Im Folgenden kann vom "Expansionsmodus mit Vorentspannung" die Rede sein, auch wenn die Verschiebevorrichtung 6 zur Entnahme von Gas aus dem Druckspeicher 1 und zur Entspannung ebendieses Gases verwendet wird, ohne im Druckspeichersystem eine Arbeitsmaschine 4 zu verwenden.

Die Fig. 3a bis 3c sollen verdeutlichen, was mit einem kombinierten Gas- und Flüssigkeits- oder getrennten Gas- oder Flüssigkeits-Verschiebebehälter 60 gemeint ist, ohne dabei abschliessend die möglichen Kombinationen von getrennten oder kombinierten Verschiebebehältern zu beschreiben. Dabei wird exemplarisch ein oder werden mehrere Kolben als Verschiebemechanismus 61 verwendet. Der Kolben und die Kolbenstange ersetzen dabei die Flüssigkeitspumpe, welche u.a. in den Fig. 2, 2a bis 2z als Verschiebemechanismus **61** dient. Die Kolbenbewegung, welche durch einen grösseren Pfeil dargestellt ist, wird über die Kolbenstange kontrolliert und verfügt über einen An- bzw. Abtrieb, welcher in den Fig. 3a bis 3c nicht gezeigt wird. Der Kolben kann dabei auch eine Trennfunktion übernehmen, um Medien (Gas/Gas, Flüssigkeit/Gas, Flüssigkeit/Flüssigkeit) zu trennen. Der Druckspeicher **1**, das Auffangbecken **7** und sonstige Komponenten wie beispielsweise die Arbeitsmaschine **4** sind in den Figuren 3a bis 3c nicht dargestellt, da diese dieselbe Funktion haben wie in den Figuren zuvor gezeigt. Die gezeigten Ausführungsvarianten der Verschiebevorrichtung **6** können für die Betriebsmodi "Kompressionsmodus ohne Nachverdichten" bzw. "Kompressionsmodus mit Nachverdichten" sowie "Expansionsmodus ohne Vorentspannung" bzw. "Expansionsmodus mit Vorentspannung" verwendet werden. Die einzelnen Schritte des Kompressions- und Expansionsvorganges entsprechen den in Fig. 2a bis 2z gezeigten Abläufen und werden nicht nochmals im Detail erläutert.

Die Fig. 3a zeigt eine Verschiebevorrichtung **6,** unter anderem bestehend aus einem kombinierten Gas- und Flüssigkeits-Verschiebebehälter **60** und einem Kolben mit Kolbenstange, welcher als Verschiebemechanismus **61** dient. Der Kolben kann dazu dienen, Gas und Flüssigkeit zu trennen. Vom kombinierten Verschiebebehälter **60** kann gasseitig eine fluidische Verbindung **11** zur Arbeitsmaschine **4** oder einer Gasquelle/senke **5** und/oder eine fluidische Verbindung **12** zum Druckspeicher **1** und flüssigkeitsseitig eine fluidische Verbindung **13** zum Druckspeicher **1** und/oder eine fluidische Verbindung **14** zum Auffangbecken **7** hergestellt werden.

Die Fig. 3b zeigt eine Verschiebevorrichtung **6**, unter anderem bestehend aus einem kombinierten Gas- und Flüssigkeits-Verschiebebehälter **60a**, einem getrennten Flüssigkeits-Verschiebebehälter **60b** und einem Kolben mit Kolbenstange, welcher als Verschiebemechanismus **61** dient. Der Kolben kann dazu dienen, Flüssigkeiten zu trennen. Zwischen den Verschiebebehältern **60a** und **60b** ist eine fluidische Verbindung vorhanden, über welche der Verschiebemachanimus **61** Flüssigkeit in beide Richtungen befördern kann. Vom kombinierten Verschiebebehälter **60a** kann gasseitig eine fluidische Verbindung **11** zur Arbeitsmaschine **4** oder zur Gasquelle/senke **5** und/oder eine fluidische Verbindung **12** zum Druckspeicher **1** hergestellt werden. Vom Flüssigkeits-Verschiebebehälter **60b** kann flüssigkeitsseitig eine fluidische Verbindung **13** zum Druckspeicher **1** und/oder eine fluidische Verbindung **14** zum Auffangbecken **7** hergestellt werden.

Die Fig. 3c zeigt eine Verschiebevorrichtung **6**, unter anderem bestehend aus einem getrennten Gas-Verschiebebehälter **60a**, einem getrennten Flüssigkeits-Verschiebebehälter **60b** und zwei Kolben mit Kolbenstangen, welche als Verschiebemechanismus **61** dienen. Die Kolben sind, wie schematisch dargestellt, durch einen Kurbeltrieb verbunden, wobei eine starre Verbindung der Kolbenstangen ebenfalls möglich ist, dafür müssten die Verschiebebehälter **60a**, **60b** aber in einer Linie angeordnet werden. Die Verschiebebehälter **60a** und **60b** sind mechanisch durch den Verschiebemechanismus **61** verbunden. Dies ermöglicht die Aufteilung von Flüssigkeit und Gas auf zwei verschiedene Verschiebebehälter. Wahlweise kann im Gas-Verschiebebehälter **60a** ein zusätzliches Flüssigkeitspolster auf dem Kolben angebracht werden, um allenfalls gewünschte Eigenschaften und Vorgänge zu begünstigen, wie beispielsweise den Wärmetransfer vom und zum Gas zu kontrollieren oder um das Totraumvolumen des Verschiebebehälters **60a** zu minimieren. Vom Gas-Verschiebebehälter **60a** kann gasseitig eine fluidische Verbindung **11** zur Arbeitsmaschine **4** oder der Gasquelle/senke **5** und/oder eine fluidische Verbindung **12** zum Druckspeicher **1** hergestellt werden. Vom Flüssigkeits-Verschiebebehälter **60b** kann flüssigkeitsseitig eine fluidische Verbindung **13** zum Druckspeicher **1** und/oder eine fluidische Verbindung **14** zum Auffangbecken **7** hergestellt werden.

Die Fig. 4 zeigt eine mögliche parallele Anordnung von zwei kombinierten Gas- und Flüssigkeits-Verschiebebehältern **60a**, **60b**, einem getrennten Flüssigkeits-Verschiebebehälter **60c** und einem Kolben mit Kolbenstange als Verschiebemechanismus **61**. Der Druckspeicher **1**, das Auffangbecken **7** und sonstige Komponenten wie beispielsweise die Arbeitsmaschine **4** sind in der Fig. 4 nicht dargestellt, da diese dieselbe Funktion haben wie in den Figuren zuvor. Zwischen den Verschiebebehältern **60a** und **60c** bzw. **60b** und **60c** kann eine fluidische Verbindung hergestellt werden, über welche der Verschiebemachanimus **61** Flüssigkeit in beide Richtungen befördern kann. Von den Verschiebebehältern **60a** und **60b** kann gasseitig eine fluidische Verbindung **11** zur Arbeitsmaschine **4** oder der Gasquelle/senke **5** und/oder eine fluidische Verbindung **12** zum Druckspeicher **1** hergestellt werden. Vom Flüssigkeits-Verschiebebehälter **60c** kann flüssigkeitsseitig eine fluidische Verbindung **13** zum Druckspeicher **1** und/oder eine fluidische Verbindung **14** zum Auffangbecken **7** hergestellt werden. Mit dieser Ausführungsvariante der Verschiebevorrichtung **6** wirkt der Verschiebemechanismus **61** abwechslungsweise auf die Verschiebebehälter **60a** und **60b**. Dadurch steht in den Verschiebebehältern **60a** und **60b** für den Kompressions- bzw. Expansionsvorgang bei ähnlichem Leistungsprofil des Verschiebemechanismus **61** mehr Zeit zur Verfügung, um allenfalls gewünschte thermodynamische Eigenschaften und Vorgänge zu begünstigen, wie beispielsweise den Wärmetransfer vom und zum Gas zu optimieren und kontrollieren.

Die Fig. 5 und 6 zeigen parallele Anordnungen von Verschiebebehältern, welche es erlauben, in den Betriebsmodi "Kompressionsmodus mit Nachverdichten" und "Expansionsmodus mit Vorentspannung" Flüssigkeit zwischen den Verschiebebehältern **60a**, **60b** und dem Druckspeicher **1** oder dem Auffangbecken **7**, aber auch zwischen den Verschiebebehältern **60a**, **60b** selbst mittels des Verschiebemechanismus **61** zu verschieben. Die zeitliche Abfolge dieses Vorganges wird Anhand der Fig. 6a bis 6y erklärt.

Der Druckspeicher **1**, das Auffangbecken **7** und sonstige Komponenten wie beispielsweise die Arbeitsmaschine **4** sind in den Figuren 6a bis 6y nicht dargestellt, da diese dieselbe Funktion haben wie in den Figuren zuvor.

Die Fig. 5 zeigt eine mögliche parallele Anordnung von Verschiebebehältern **60a**, **60b** und einem Kolben als Verschiebemechanismus **61**. Die gezeigte Verschiebevorrichtung **6** besteht unter anderem aus zwei kombinierten Gas- und Flüssigkeits-Verschiebebehältern **60a** und **60b**, einem getrennten Flüssigkeits-Verschiebebehälter **60c** und einem Kolben mit Kolbenstange, welcher als Verschiebemechanismus **61** dient. Zwischen den Verschiebebehältern **60a** und **60c** bzw. **60b** und **60c** kann jeweils eine fluidische Verbindungen hergestellt werden, wodurch der Verschiebemechanismus **61** unter anderem Flüssigkeit zwischen den Verschiebebehältern **60a** und **60b** in beide Richtungen verschieben kann. Von den Verschiebebehältern **60a** und **60b** kann gasseitig eine fluidische Verbindung **11** zur Arbeitsmaschine **4** oder der Gasquelle/senke **5** und/oder eine fluidische Verbindung **12** zum Druckspeicher **1** hergestellt werden. Vom Flüssigkeits-Verschiebebehälter **60c** kann flüssigkeitsseitig eine fluidische Verbindung **13** zum Druckspeicher **1** und/oder eine fluidische Verbindung **14** zum Auffangbecken **7** hergestellt werden. Mit dieser Ausführungsvariante der Verschiebevorrichtung **6** kann der Verschiebemechanismus **61** wahlweise abwechslungsweise sowie auch gleichzeitig auf die Verschiebebehälter **60a** und **60b** wirken.

Die Fig. 6 und 6a bis 6y zeigen eine mögliche parallele Ausführungsform von Verschiebebehältern **60a** und **60b** und einer Flüssigkeitspumpe als Verschiebemechanismus **61**. Von den kombinierten Gas- und Flüssigkeits-Verschiebebehältern **60a** und **60b** kann gasseitig eine fluidische Verbindung **11** zur Arbeitsmaschine **4** oder der Gasquelle/senke **5** und/oder eine fluidische Verbindung **12** zum Druckspeicher **1** hergestellt werden. Zudem kann flüssigkeitsseitig eine fluidische Verbindung **13** zum Druckspeicher **1**, eine fluidische Verbindung **14** zum Auffangbecken **7** und/oder eine fluidische Verbindung zwischen den Verschiebebehältern **60a** und **60b** hergestellt werden. Zusammen mit den Ventilen **64** und **65** ermöglicht der Ventilblock **66**, bestehend aus vier einzelnen Ventilen, die Definition der Strömungsrichtung von Flüssigkeit durch die Flüssigkeitspumpe **61** von/zu den Verschiebebehältern **60a** und **60b**, von/zu dem Auffangbecken **7** und von/zu dem Druckspeicher **1**. Dadurch kann wahlweise Flüssigkeit in beide Richtungen zwischen einem Verschiebebehälter **60a** oder **60b** und dem Druckspeicher **1**, dem Auffangbecken **7** oder zwischen den Verschiebebehältern **60a** und **60b** selbst verschoben werden.

In den Fig. 6a bis 6c ist die zeitliche Abfolge der Verdichtung einer Einheit Gas **30** innerhalb eines Verschiebebehälters **60a** zu sehen. Dabei wird Flüssigkeit aus dem parallel angeordneten Verschiebebehälter **60b** durch den Verschiebemechanismus **61** in den Verschiebebehälter **60a** verschoben um die Einheit Gas **30** zu verdichten, wobei durch die fluidische Verbindung **11** Gas in den Verschiebebehälter **60b** nachströmt. Sobald die Einheit Gas **30** das gewünschte Druckniveau erreicht hat werden wie in Fig. 6d gezeigt die fluidischen Verbindungen **12** und **13** zwischen dem Verschiebebehälter **60a** und dem Druckspeicher **1** hergestellt, um mittels des Verschiebemechanismus **61** die Einheit verdichtetes Gas **30** in den Druckspeicher **1** zu befördern, indem das bereits beschriebene Verfahren angewendet wird, wobei dem Druckspeicher **1** eine Einheit Flüssigkeit **20** entnommen wird, um die Einheit verdichtetes Gas **30** leistungsarm aus dem Verschiebebehälter **60a** in den Druckspeicher **1** zu verschieben. In der Fig. 6e ist der abgeschlossene Verschiebevorgang gezeigt, wobei sich die Einheit Flüssigkeit **20** in dem Verschiebebehälter **60a** befindet, um wie in der Fig. 6f und 6g gezeigt, durch das Herstellen der fluidischen Verbindung **14** zwischen der Verschiebevorrichtung **6** und dem Auffangbecken **7** in das Auffangbecken **7** verschoben zu werden. Dadurch, dass die fluidische Verbindung **11** zwischen der Verschiebevorrichtung **6** und der Arbeitsmaschine **4** oder direkt zur Gasquelle **5** hergestellt ist, kann dabei Gas in den Verschiebebehälter **60a** nachströmen. Wie in den Figuren 6h bis 6j gezeigt, wiederholt sich der Vorgang zur Verdichtung einer sich im Verschiebebehälter **60b** befindlichen Einheit Gas **30**, um, wie in Fig. 6k und 6l gezeigt, in den Druckspeicher **1** verschoben zu werden, wobei dem Druckspeicher **1** eine Einheit Flüssigkeit **20** entnommen wird, um wie in den Figuren 6m und 6n gezeigt in das Auffangbecken **7** verschoben zu werden. Die Vorgänge in den Figuren 6h bis 6n werden nicht näher erläutert, da sie im Prinzip den Vorgängen in den Figuren 6a bis 6g entsprechen. Die Fig. 6o zeigt dann die zeitliche Fortsetzung, wobei der Zustand der Verschiebevorrichtung **6** wieder dem Zustand in Fig. 6a entspricht und sich der gesamte Vorgang zur Verdichtung von Gas und deren Einbringung in den Druckspeicher **1** wiederholen kann.

Die Fig. 6p bis 6y zeigen die zeitliche Abfolge, um verdichtetes Gas **3** mittels der Verschiebevorrichtung **6** aus dem Druckspeicher **1** zu entnehmen und im Betriebsmodus "Expansionsmodus mit Vorentspannung" auf ein tieferes Druckniveau zu bringen.

In den Fig. 6p und Fig. 6q ist die zeitliche Abfolge der Entnahme einer Einheit verdichtetes Gas **30** aus dem Druckspeicher **1** zu sehen, indem mittels der Verschiebevorrichtung **6** und dem Herstellen der fluidischen Verbindungen **12** und **13** zwischen der Verschiebevorrichtung **6** und dem Druckspeicher **1** eine Einheit Flüssigkeit **20** aus dem Verschiebebehälter **60a** in den Druckspeicher **1** verschoben wird. Wie in den Fig. 6r bis 6t zu sehen ist, werden danach die fluidischen Verbindungen **12** und **13** zwischen dem Verschiebebehälter **6a** und dem Druckspeicher **1** getrennt und durch das Schalten des Ventils **66** eine fluidische Verbindung zwischen den Verschiebebehältern 6a und 6b hergestellt, wobei die verdichtete Einheit Gas **30** im Verschiebebehälter **60a** entspannt wird, indem mittels dem Verschiebemechanismus **61** Flüssigkeit in den Verschiebebehälter **60b** kontrolliert verschoben wird. Das entspannte Gas im Verschiebebehälter **60b** wird dabei durch die fluidische Verbindung **11** der Arbeitsmaschine **4** oder direkt der Gassenke **5** zugeführt. Nach dem Erreichen des gewünschten Druckniveaus im Verschiebebehälter **60a** wird, wie in Fig. 6u und 6v gezeigt, unter anderem durch das Schalten des Ventils **66** eine fluidische Verbindung **14** zwischen dem Verschiebebehälter **60b** und dem Auffangbecken **7** hergestellt, um die Menge an Flüssigkeit, welche der Einheit Flüssigkeit **20** entspricht, mittels des Verschiebemechanismus **61** aus dem Auffangbecken **7** in den Verschiebebehälter **60b** zu verschieben. Danach werden wie in Fig. 6w und 6x gezeigt, unter anderem durch das Schalten des Ventils **66**, die fluidischen Verbindungen **12** und **13** zwischen dem Verschiebebehälter **60b** und dem Druckspeicher **1** hergestellt, um dem Druckspeicher **1** eine Einheit Gas **30** zu entnehmen, indem mittels des Verschiebemechanismus **61** eine Einheit Flüssigkeit **20** vom Verschiebebehälter **60b** in den Druckspeicher **1** verschoben wird. Danach wird, wie in der Fig. 6y gezeigt, die sich im Verschiebebehälter **60b** befindliche Einheit Gas **30,** analog dem Vorgang in den Fig. 6r bis 6t, entspannt. Auf diesen Vorgang und die erneute Entnahme einer weiteren Einheit Gas aus dem Druckspeicher **1** und der Entspannung ebendieser in dem Verschiebebehälter **60a** wird nicht näher eingegangen, da dieses aus dem bereits Erklärten nachvollzogen werden kann.

Eine mehrstufige bzw. serielle Anordnung gibt in den Betriebsmodi "Kompressionsmodus mit Nachverdichten" und "Expansionsmodus mit Vorentspannung" Sinn. Die Vorteile bei der Beschickung des Druckspeichers **1** mit verdichtetem Gas oder die Entnahme von verdichtetem Gas aus dem Druckspeicher **1** mittels der Verschiebevorrichtung **6** wurden in dem vorhergehenden Text erläutert. Derselbe Verschiebevorgang kann aber auch zwischen zwei unterschiedlichen Druckstufen innerhalb der Verschiebevorrichtung **6** angewendet werden, hierbei wird im Folgenden von einer Ersten und Zweiten Stufe gesprochen, wobei nach demselben Prinzip auch weitere Stufen hinzugefügt werden können.

Mit den Figuren 7 und 7a bis 7n wird die Funktionsweise der Verschiebevorrichtung **6** genauer erläutert, ohne dabei die nach der Fig. 1 weiteren zum Druckspeichersystem gehörenden Komponenten zu zeigen, da sich deren Funktion nicht geändert hat.

Die Fig. 7 und 7a bis 7n zeigen eine mögliche parallele und serielle Ausführungsform von Verschiebebehältern und zwei Flüssigkeitspumpen **61a** und **61b** als Verschiebemechanismen, wobei der Verschiebevorgang zwischen der zweiten Stufe und dem Druckspeicher **1** aber auch zwischen der Ersten Stufe und der zweiten Stufe angewendet wird. Die Erste Stufe besteht dabei aus zwei Verschiebebehältern **60a** und **60b**, einem Verschiebemechanismus **61a** und den entsprechenden Ventilen. Zur Zweiten Stufe gehört demnach der Verschiebebehälter **60c,** der Verschiebemechanismus **61b** und die entsprechenden Ventile. Die Verschiebevorrichtung kann dabei gasseitig durch die fluidische Verbindung **11** mit der Arbeitsmaschine **4** oder der Gasquelle/senke **5** und mittels der fluidischen Verbindung **12** mit dem Druckspeicher **1** verbunden werden. Flüssigkeitsseitig kann die Verschiebevorrichtung **6** mittels der fluidischen Verbindungen **13** mit dem Druckspeicher **1** und mittels der fluidischen Verbindung **14** mit dem Auffangbecken **7** verbunden werden.

In den Fig. 7a und 7b ist die zeitliche Abfolge der Verdichtung einer Einheit Gas **30b** innerhalb des Verschiebebehälters **60c** zu sehen, indem mittels des Verschiebemechanismus **61b** Flüssigkeit aus dem Verschiebebehälter **60b** in den Verschiebebehälter **60c** verschoben wird. Gleichzeitig wird auch in dem Verschiebebehälter **60a** eine Einheit Gas **30a** verdichtet, indem mittels des Verschiebemechanismus **61a** Flüssigkeit aus dem Verschiebebehälter **60b** in den Verschiebebehälter **60a** verschoben wird. Bei Erreichen des gewünschten Druckniveaus im Verschiebebehälter **60c** wird wie in der Fig. 7c und 7d gezeigt die verdichtete Einheit Gas **30b** aus dem Verschiebebehälter **60c** in den Druckspeicher **1** verschoben, indem eine Einheit Flüssigkeit **20** mittels des Verschiebemechanismus **61b** aus dem Druckspeicher **1** in den Verschiebebehälter **60c** verschoben wird. Derweil wird die Einheit Gas **30a** im Verschiebebehälter **60a** weiter verdichtet, bis das gewünschte Druckniveau erreicht ist. Danach wird wie in den Fig. 7e und 7f zu sehen ist, die verdichtete Einheit Gas **30a** in den Verschiebebehälter **60c** verschoben, indem mittels dem Verschiebemechanismus **61a** eine Einheit Flüssigkeit **20a** aus dem Verschiebebehälter **60c** in den Verschiebebehälter **60a** verschoben wird. Gleichzeitig wird mittels dem Verschiebemechanismus **61b** die Menge der Einheit Flüssigkeit **20** entsprechend aus dem Verschiebebehälter **60b** durch die fluidische Verbindung **14** in das Auffangbecken **7** befördert.

In der Fig. 7g wird der Ausgangszustand der Verschiebevorrichtung **6** gezeigt, bei welchem die Einheit Gas **30a** in dem Verschiebebehälter **60c** verdichtet und in den Druckspeicher eingebracht und eine weitere Einheit Gas **30c** im Verschiebebehälter **60b** verdichtet wird, um danach in den Verschiebebehälter **60c** verschoben zu werden, analog zu den Vorgängen aus den Fig. 7a bis 7f.

Die Fig. 7h bis 7n zeigen die zeitliche Abfolge, um verdichtetes Gas **3** mittels der Verschiebevorrichtung **6** aus dem Druckspeicher **1** zu entnehmen und im Betriebsmodus "Expansionsmodus mit Vorentspannung" auf ein tieferes Druckniveau zu bringen.

In den Fig. 7h und 7i ist die Entnahme einer Einheit verdichtetes Gas **30b** aus dem Druckspeicher **1** zu sehen, indem mittels der Verschiebevorrichtung **6** und dem Herstellen der fluidischen Verbindungen **12** und **13** zwischen der Verschiebevorrichtung **6** und dem Druckspeicher **1** eine Einheit Flüssigkeit **20b** aus dem Verschiebebehälter **60c** in den Druckspeicher **1** verschoben wird. Gleichzeitig wird in dem Verschiebebehälter **60a** eine Einheit Gas **30a** entspannt, indem mittels des Verschiebemechanismus **61a** Flüssigkeit aus dem Verschiebebehälter **60a** in den Verschiebebehälter **60b** kontrolliert verschoben wird. Wie in den Fig. 7j und 7k gezeigt ist, wird die Einheit Gas **30a** im Verschiebebehälter **60a** weiter entspannt, bis das gewünschte Druckniveau erreicht ist. Währenddessen wird auch die Einheit verdichtetes Gas **30b**, welche sich im Verschiebebehälter **30c** befindet, entspannt, indem Flüssigkeit mittels des Verschiebemechanismus **61b** aus dem Verschiebebehälter **60c** in den Verschiebebehälter **60b** kontrolliert verschoben wird, bis das gewünschte Druckniveau erreicht ist. Danach wird wie in den Fig. 7l und 7m gezeigt die entspannte Einheit Gas **30b** aus dem Verschiebebehälter **60c** in den Verschiebebehälter **60b** verschoben, indem mittels des Verschiebemechanismus **61a** eine Einheit Flüssigkeit **20b** aus dem Verschiebebehälter **60b** in den Verschiebebehälter **60c** verschoben wird. In der Fig. 7n ist der Anfangszustand der Verschiebevorrichtung **6** zu sehen, auf welchen die Entspannung der sich im Verschiebebehälter **60b** befindlichen Einheit Gas **30b** folgt, aber auch die weitere Entnahme einer Einheit Gas aus dem Druckspeicher **1** und deren Verschiebung in den Verschiebebehälter **60c**, indem mittels des Verschiebemechanismus **61b** die Einheit Flüssigkeit **20c** aus dem Verschiebebehälter **60c** in den Druckspeicher **1** verschoben wird, analog den Vorgängen aus den Fig. 7h bis 7m.

Die Fig. 8 zeigt eine mögliche Trennvorrichtung **31**, um sich im Druckspeicher **1** befindliche Flüssigkeit **2** und verdichtetes Gas **3** zu trennen. Die Trennvorrichtung **31** ist hier exemplarisch als Blase ausgeführt, welche ihre Form verändern kann, um sich dem Füllstand des Druckspeichers **1** anzupassen. Diese Funktion kann natürlich auch durch Trennvorrichtungen anderer Bauart erfüllt werden wie beispielsweise durch einen Kolben. Die Trennung der Flüssigkeit **2** von dem Gas **3** kann erforderlich sein, um den Anteil an gelöstem Gas in der Flüssigkeit zu begrenzen oder eine beliebige Orientierung des Druckspeichers **1** zu ermöglichen, ohne auf die Wirkrichtung von Kräften wie beispielsweise der Gravitations- oder Auftriebskräfte Rücksicht nehmen zu müssen.

Die Fig. 9 zeigt eine mögliche Anordnung eines Regenerators **69** und/oder eines Wärmetauschers **68** in einem Verschiebebehälter **60**. Diese dient dazu, um Wärme, welche in dem Verschiebebehälter **60** vom Gas über den Wärmetauscher **68** abgeführt und/oder über den Regenerator **69** an die Flüssigkeit abgegeben wird, oder umgekehrt Wärme, welche über den Wärmetauscher **68** zugeführt und/oder von der Flüssigkeit über den Regenerator **69** dem Gas zugeführt wird.

Die Fig. 10 zeigt ein Energiespeichersystem wie in Fig. 1 gezeigt, mit dem Unterschied, dass das Auffangbecken **7** durch eine fluidische Verbindung **15** mit der Arbeitsmaschine **7** verbunden ist und dadurch auf ein beliebiges Druckniveau gebracht werden kann. Falls in dem Energiespeichersystem alleine die Verschiebevorrichtung **6** zur Verdichtung bzw. Entspannung von Gas verwendet wird, ohne Arbeitsmaschine **4**, dann wird das Auffangbecken **7** mittels der fluidischen Verbindung **15** mit der Verschiebevorrichtung **6** verbunden, um das Druckniveau im Auffangbecken **7** zu kontrollieren.

Die Fig. 11 zeigt das Zusammenfassen von Druckbehältern **101**, **102**, ... zu einem Druckspeicher **1**. Diese Anordnung erhöht die Energiedichte des Druckspeichersystems, indem die Menge an Flüssigkeit im Vergleich zu dem Druckspeichervolumen reduziert wird.

## Patentansprüche

1. Verfahren zum Bewirtschaften eines Druckspeichersystems mit mindestens einem Druckspeicher, das heisst einerseits zum Befüllen desselben mit verdichtetem Gas und/oder andrerseits umgekehrt zur Entnahme von verdichtetem Gas aus dem Druckspeicher, wobei der Druckspeicher (**1**) teilweise mit Flüssigkeit (**2**) gefüllt ist und der Rest des Volumens mit verdichtetem Gas (**3**) gefüllt ist, wobei die Beschickung des Druckspeichers (**1**) mit einer Einheit verdichtetem Gas (**30**) mit der Entnahme einer Einheit Flüssigkeit (**20**) aus dem Druckspeicher (**1**) einhergeht, wobei die entnommene Einheit Flüssigkeit (**20**) verwendet wird, um die Einheit verdichtetes Gas (**30**) mittels einer Verschiebevorrichtung (**6**), bestehend aus mindestens einem Verschiebemechanismus (**61**) und mindestens einem Verschiebebehälter (**60**) in den Druckspeicher zu verschieben, oder umgekehrt die Entnahme einer Einheit verdichtetes Gas (**30**) aus dem Druckspeicher (**1**) mit der Beschickung des Druckspeicher (**1**) mit einer Einheit Flüssigkeit (**20**) einhergeht, wobei die Einheit Flüssigkeit (**20**) verwendet wird, um die Einheit verdichtetes Gas (**30**) mittels der Verschiebevorrichtung (**6**) aus dem Druckspeicher (**1**) zu entnehmen, wobei die Verschiebung von verdichtetem Gas (**30**) in oder aus dem Druckspeicher (**1**) bei Bedarf leistungsarm erfolgt, das heisst, dass keine Höhendifferenz zwischen dem Druckspeicher (**1**) und der Verschiebevorrichtung (**6**) nötig ist, sowie kein hermetisch eingeschlossenes Gaspolster im Druckspeicher (**1**) nötig ist, und sowie für die Verschiebung der Einheit Flüssigkeit (**20**) nur das Überwinden einer Druckdifferenz verursacht durch Reibungs- und Strömungsverlusten sowie einer Druckdifferenz verursacht durch eine allenfalls vorhandene Höhendifferenz nötig ist.

2. Verfahren zum Bewirtschaften eines Druckspeichersystems nach Anspruch 1, bei welchen weiter eine Arbeitsmaschine (**4**) zum Verdichten von Gas (**3**) unter der Verwendung von mechanischer Energie oder umgekehrt zum Entspannen von verdichtetem Gas (**3**) unter der Abgabe von mechanischer Energie eingesetzt wird, welche von einem Antrieb beziehungsweise Abtrieb (**8**) bereitgestellt bzw. abgenommen wird, und wobei diese Arbeitsmaschine fluidisch mit einer Gas Quelle/Senke (**5**) verbunden ist, *dadurch gekennzeichnet,* **dass** von der Verschiebevorrichtung (**6**) gasseitig bedarfsweise eine fluidische Verbindung (**11**, **12**) zur Arbeitsmaschine (**4**) und/oder dem Druckspeicher (**1**) hergestellt wird, und dass flüssigkeitsseitig bedarfsweise eine fluidische Verbindung (**13**, **14**) zum Druckspeicher (**1**) und/oder dem Auffangbecken (**7**) durch das Öffnen entsprechender Ventile (**64**, **65**) hergestellt wird, um das Verschieben von Flüssigkeit (2) zwischen der Verschiebevorrichtung (6) und dem Druckspeicher (1) oder dem Auffangbecken (7) zu ermöglichen und um im gleichen Zug das Verschieben von Gas (3) zwischen der Verschiebevorrichtung (6) und dem Druckspeicher (1) oder der Arbeitsmaschine (4) zu ermöglichen.

3. Verfahren zum Bewirtschaften eines Druckspeichersystems nach einem der vorhergehenden Ansprüche, wobei die Verschiebevorrichtung (6) unter anderem mit mehreren, getrennten und/oder kombinierten Verschiebebehältern (60a, b, c) betrieben wird, welche mechanisch oder fluidisch miteinander verbunden sind und parallel und/oder seriell angeordnet sind.

4. Verfahren zum Bewirtschaften eines Druckspeichersystems nach einem der vorhergehenden Ansprüche, wobei die Verschiebevorrichtung (6) zum Verdichten von Gas bzw. zum Entspannen von Gas genützt wird, indem wahlweise Flüssigkeit zwischen der Verschiebevorrichtung (6) und dem Druckspeicher (1), dem Auffangbecken (7) oder innerhalb der Verschiebevorrichtung (6) selbst, das heisst zwischen Verschiebebehältern (60a, b, c), verschoben wird.

5. Verfahren zum Bewirtschaften eines Druckspeichersystems nach einem der vorhergehenden Ansprüche, wobei Flüssigkeit, welche sich innerhalb der Verschiebevorrichtung (6), dem Druckspeicher (1) oder dem Auffangbecken (7) befindet, als Wärmetransfermedium und/oder Wärmespeichermedium genützt wird, um vor, während und/oder nach der Verdichtung bzw. Entspannung von Gas vorzugsweise innerhalb eines Verschiebebehälters (60a, b, c) dem Gas Wärme zuzuführen oder abzuführen.

6. Verfahren zum Bewirtschaften eines Druckspeichersystems nach einem der vorhergehenden Ansprüche, wobei der Wärmeaustausch zwischen dem Gas und der Flüssigkeit innerhalb der Verschiebebehälter (60a, b, c) mittels eines Regenerators (69) erhöht wird, um Wärme vom Gas an die Flüssigkeit abzugeben oder Wärme von der Flüssigkeit an das Gas abzugeben.

7. Verfahren zum Bewirtschaften eines Druckspeichersystems nach einem der vorhergehenden Ansprüche, wobei der Druckspeicher (1) aus mindestens zwei gesonderten Druckbehältern (101,102) besteht und die Flüssigkeit (2) während der Beschickung des ersten Druckbehälters (101) mit verdichtetem Gas (3) in einen zweiten Druckbehälter (102) verschoben wird, welcher nach dem Beschicken des ersten Druckspeichers (101) mit verdichtetem Gas beschickt wird, und die Flüssigkeit (2) erst während der Beschickung des letzten Druckbehälters in das Auffangbecken (7) verschoben wird, wobei bei der Entnahme von verdichtetem Gas (3) aus dem Druckspeicher (1) die Vorgehensweise die Gleiche ist, indem die einzelnen Druckbehälter (101,102) nacheinander entleert werden.

8. Einrichtung zum Bewirtschaften eines Druckspeichersystems zur Durchführung des Verfahrens nach einem der Ansprüche 1 bis 7, mit mindestens einem Druckspeicher (1), einem Auffangbecken (7) beide teils mit einer Flüssigkeit und teils mit Gas gefüllt, einer Arbeitsmaschine (4) zur Umwandlung von verdichtetem Gas in mechanische Energie und umgekehrt, verbunden mit einer Gas Quelle/Senke (5), wobei eine Verschiebevorrichtung (6) vorhanden ist, mit fluidischen Verbindungen flüssigkeitsseitig (13, 14) zum Druckspeicher (1) und zum Auffangbecken (7) sowie mit fluidischen Verbindungen gasseitig (11, 12) zur Arbeitsmaschine (4) und zum Druckspeicher (1), wobei die Verschiebevorrichtung mindestens einen getrennten oder kombinierten Verschiebebehälter (60) einschliesst, sowie Ventile zur wahlweisen Absperrung einer oder mehrerer der fluidischen Verbindungen (11-14) für Gas oder Flüssigkeit, wobei keine Höhendifferenz zwischen dem Druckspeicher (1), der Verschiebevorrichtung (6) und/oder dem Auffangbecken (7) nötig ist, und wobei kein hermetisch eingeschlossenes Gaspolster im Druckspeicher (1) nötig ist, und wobei bei der Verschiebung von verdichtetem Gas in oder aus dem Druckspeicher (1) für die Verschiebung von Flüssigkeit nur das Überwinden einer Druckdifferenz verursacht durch Reibungs- und Strömungsverlusten sowie einer Druckdifferenz verursacht durch eine allenfalls vorhandene Höhendifferenz nötig ist.

9. Einrichtung zum Bewirtschaften eines Druckspeichersystems nach Anspruch 8, *dadurch gekennzeichnet*, **dass** das Druckspeichersystem wenigstens die folgenden Komponenten einschliesst:

• der Druckspeicher (1), teilweise gefüllt mit Flüssigkeit (2) und verdichtetem Gas (3), wobei diese beiden Medien offen aneinander angrenzen oder durch eine geeignete Trennvorrichtung, nämlich mittels einer Blase, eines Kolbens oder einer Membran voneinander getrennt sind, und ein Auffangbecken (7),
• eine Verschiebevorrichtung (6), bestehend aus mindestens einem getrennten oder kombinierten Verschiebebehälter (60), wobei die darin befindlichen Medien offen aneinander angrenzen oder durch eine geeignete Trennvorrichtung in Form einer Blase, eines Kolbens oder einer Membran voneinander getrennt sind, und einem Verschiebemechanismus (61) zum Verschieben von Flüssigkeit innerhalb der Verschiebevorrichtung (6), das heisst zwischen Verschiebebehältern und/oder zwischen der Verschiebevorrichtung **(6)** und dem Druckspeicher **(1)** oder dem Auffangbecken **(7)**,

• eine fluidische Verbindung **(13)** zwischen der Verschiebevorrichtung **(6)** und dem Druckspeicher **(1)** zum bei Bedarf leistungsarmen Verschieben von Flüssigkeit zwischen der Verschiebevorrichtung **(6)** und dem Druckspeicher **(1)**,

• eine fluidische Verbindung **(14)** zwischen der Verschiebevorrichtung **(6)** und dem Auffangbecken **(7)** zum bei Bedarf leistungsarmen Verschieben von Flüssigkeit zwischen der Verschiebevorrichtung **(6)** und dem Auffangbecken **(7)**,

• eine fluidische Verbindung **(12)** zwischen der Verschiebevorrichtung **(6)** und dem Druckspeicher **(1)** zum bei Bedarf leistungsarmen Verschieben von Gas zwischen der Verschiebevorrichtung **(6)** und dem Druckspeicher **(1)**,

• eine fluidische Verbindung **(11)** zwischen der Verschiebevorrichtung **(6)** und der Arbeitsmaschine **(4)** und/oder der Gasquelle/senke **(5)** zum bei Bedarf leistungsarmen Verschieben von Gas zwischen der Verschiebevorrichtung **(6)** und der Arbeitsmaschine **(4)** und/oder der Gasquelle/senke **(5)**,

• steuerbare Ventile zur Definition der Strömungsrichtungen der Flüssigkeit und des Gases im Betrieb,

• eine Arbeitsmaschine **(4)**, zum Verdichten und/oder Entspannen von Gas,

• einen An-/Abtrieb **(8)**, zur Umwandlung von Energie aus einer beliebigen Energieform in mechanische Energie, um die Arbeitsmaschine **(4)** und bedarfsweise den Verschiebemechanismus **(61)** anzutreiben oder umgekehrt, geeignet zur Aufnahme mechanischer Energie von der Arbeitsmaschine **(4)** und bedarfsweise vom Verschiebemechanismus **(61)** und zur Umwandlung und Abgabe in einer beliebigen Energieform.

10. Einrichtung zum Bewirtschaften eines Druckspeichersystems nach einem der Ansprüche 8 oder 9, *dadurch gekennzeichnet*, **dass** die Verschiebevorrichtung **(6)** in die Arbeitsmaschine **(4)** integriert bzw. mit der Arbeitsmaschine **(4)** kombiniert ist oder diese ersetzt oder eine bis mehrere Stufen derselben bildet.

11. Einrichtung zum Bewirtschaften eines Druckspeichersystems nach einem der Ansprüche 8 bis 10, *dadurch gekennzeichnet,* **dass** der Verschiebmechanismus **(61)** einen separaten Antrieb/Abtrieb besitzt oder mit dem Antrieb/Abtrieb **(8)** der Arbeitsmaschine **(4)** gekoppelt ist und aus einem Kolben oder einer Pumpe besteht.

### Claims

1. Method for managing a pressure storage system with at least one pressure storage tank, i.e. on the one hand for filling it with compressed gas and/or on the other hand conversely for withdrawing compressed gas from the pressure storage tank, wherein the pressure storage tank **(1)** is partially filled with liquid **(2),** whereby the charging of the pressure storage tank **(1)** with a unit of compressed gas **(30)** is accompanied by the withdrawal of a unit of liquid **(20)** from the pressure storage tank **(1)**, whereby the withdrawn unit of liquid **(20)** is being used to displace the unit of compressed gas **(30)** into the pressure storage tank **(1)** by means of a shifting device **(6)** consisting of at least one shifting mechanism **(61)** and at least one shifting container **(60)**, or vice versa the withdrawal of a unit of compressed gas **(30)** from the pressure storage tank **(1)** is accompanied by the charging of the pressure storage tank **(1)** with a unit of liquid **(20)**, whereby the unit of liquid **(20)** is being used to withdraw the unit of compressed gas **(30)** from the pressure storage tank **(1)** by means of the shifting device **(6)**, whereby the shifting of compressed gas **(30)** into or out of the pressure storage tank **(1)** is performed at low power when required, which means that no height difference between the pressure storage tank **(1)** and the shifting device **(6)** is necessary, and no hermetically sealed gas cushion in the pressure storage tank **(1)** is necessary, and for the shifting of the unit of liquid **(20)** only the overcoming of a pressure difference caused by friction and flow losses as well as a pressure difference caused by a possibly existing height difference is necessary.

2. Method for operating a pressure storage system according to claim 1, in which further a working machine **(4)** is used to compress gas **(3)** using mechanical energy or vice versa to expand compressed gas **(3)** by releasing mechanical energy which is provided or absorbed by a drive or output **(8)** correspondingly, and wherein this working machine **(4)** is fluidically connected to a gas source/sink **(5)**, *characterized in that* from the shifting device **(6)** on the side of the gas when required a fluidic connection **(11, 12)** to the working machine **(4)** and/or the pressure storage tank **(1)** is established and that on the side of the liquid when required a fluidic connection **(13,14)** to the pressure storage tank **(1)** and/or to the collecting basin **(7)** is established by opening of respective valves **(64, 65)** in order to enable the shifting of liquid **(2)** between the shifting device **(6)** and the pressure storage tank (1) or the collecting basin **(7)** and in order to enable the shifting of gas **(3)** between the shifting device **(6)** and the pressure storage tank **(1)** or the working machine **(4)** at the same time.

3.  Method for managing a pressure storage system according to one of the preceding claims, wherein the shifting device **(6)** is operated inter alia with several, separate and/or combined shifting containers **(60a, b, c)**, which are mechanically or fluidically connected to one another and are arranged in parallel and/or serially.

4.  Method for managing a pressure storage system according to one of the preceding claims, wherein the shifting device **(6)** is used for compressing gas or expanding gas, respectively, by selectively shifting liquid between the shifting device **(6)** and the pressure storage tank **(1)**, the collecting basin **(7)** or within the shifting device **(6)** itself, i.e. between shifting containers **(60a, b, c)**.

5.  Method for managing a pressure storage system according to one of the preceding claims, wherein liquid which is located within the shifting device **(6)**, the pressure storage tank **(1)** or the collecting basin **(7)** is used as heat transfer medium and/or heat storage medium in order to supply or remove heat to or from the gas before, during and/or after the compression or expansion of gas, preferably within a shifting container **(60a, b, c)**.

6.  Method of managing a pressure storage system according to one of the preceding claims, wherein the heat exchange between the gas and the liquid within the shifting containers **(60a, b, c)** is increased by means of a regenerator **(69)** to transfer heat from the gas to the liquid or to transfer heat from the liquid to the gas.

7.  Method for managing a pressure storage system according to one of the preceding claims, wherein the pressure storage tank **(1)** consists of at least two separate pressure containers **(101, 102)** and during the charging of the first pressure container **(101)** with compressed gas **(3)**, the liquid **(2)** is displaced into a second pressure container **(102)**, which is charged with compressed gas **(3)** after the first pressure container **(101)** has been charged, and the liquid **(2)** is only displaced into the collecting basin **(7)** during the charging of the last pressure container, wherein the procedure is the same when removing compressed gas **(3)** from the pressure storage tank **(1)**, in that the individual pressure containers **(101, 102)** are emptied one after the other.

8.  Installation for operating a pressure storage system for carrying out the procedure according to one of claims 1 to 7, with at least one pressure storage tank **(1)**, a collecting basin **(7)** both partly filled with a liquid and partly filled with gas, a working machine **(4)** for converting compressed gas into mechanical energy and vice versa, connected to a gas source/sink **(5)**, whereby a shifting device **(6)** is present, with fluidic connections on the liquid side **(13, 14)** to the pressure storage tank **(1)** and to the collecting basin **(7)** and with fluidic connections on the gas side **(11, 12)** to the working machine **(4)** and to the pressure storage tank **(1)**, wherein the shifting device comprises at least one separate or combined shifting container **(60)**, and valves for selectively shutting off one or more of the fluidic connections **(11-14)** for gas or liquid, wherein no height difference between the pressure storage tank **(1)**, the shifting device **(6)** and/or the collecting basin **(7)** is necessary, and wherein no hermetically sealed gas cushion in the pressure storage tank **(1)** is necessary, and wherein, in the case of the shifting compressed gas into or out of the pressure storage tank **(1)** for the shifting of liquid, only the overcoming of a pressure difference caused by friction and flow losses as well as of a pressure difference caused by a possibly existing height difference is necessary.

9.  Installation for operating a pressure storage system according to claim 8, *characterized in that* the pressure storage system includes at least the following components:

    • the pressure storage tank **(1)**, partially filled with liquid **(2)** and compressed gas **(3)**, whereby these two media being openly adjacent to each other or separated from each other by a suitable separating device, namely by means of a bladder, piston or membrane, and a collecting basin **(7)**,
    • a shifting device **(6)**, consisting of at least one separate or combined shifting container **(60)**, wherein the media contained therein being openly adjacent to each other or separated from each other by a suitable separating device in the form of a bladder, a piston or a membrane, and a shifting mechanism **(61)** for the displacement of liquid within the shifting device **(6)**, i.e. between shifting containers and/or between the shifting device **(6)** and the pressure storage tank **(1)** or the collecting basin **(7)**,
    • a fluidic connection **(13)** between the shifting device **(6)** and the pressure storage tank **(1)** for the at low power when required displacement of fluid between the shifting device **(6)** and the pressure storage tank **(1)**,
    • a fluidic connection **(14)** between the shifting device **(6)** and the collecting basin **(7)** for the at low power when required displacement of fluid between the shifting device **(6)** and the collecting basin **(7)**,
    • a fluidic connection **(12)** between the shifting device **(6)** and the pressure storage tank **(1)** for the at low power when required displacement of gas between the shifting device **(6)** and the pressure storage tank **(1)**,
    • a fluidic connection **(11)** between the shifting device **(6)** and the working machine **(4)** and/or the gas source/sink **(5)** for the at low power when required displacement of gas between the shifting device **(6)** and the working machine **(4)** and/or the gas source/sink **(5)**,
- controllable valves to define the flow directions of the fluid and gas during operation,
- a working machine **(4)**, for compressing and/or expanding gas,
- an input/output drive **(8)** for converting energy from any form of energy into mechanical energy in order to drive the working machine **(4)** and, if necessary, the shifting mechanism **(61)** or vice versa, suitable for receiving mechanical energy from the working machine **(4)** and, if necessary, from the shifting mechanism **(61)** and for converting and outputting it in any form of energy.

10. Installation for operating a pressure storage system according to one of claims 8 or 9, **characterized in that** the shifting mechanism **(6)** is integrated into the working machine **(4)** or combined with the working machine **(4)** or replaces it or forms one to several stages of it.

11. Installation for operating a pressure storage system according to one of the claims 8 to 10, **characterized in that** the shifting mechanism **(61)** has a separate drive/output or is coupled to the drive/output **(8)** of the working machine **(4)** and consists of a piston or a pump.

**Revendications**

1. Procédé de gestion d'un système d'accumulateur de pression comportant au moins un accumulateur de pression, c'est-à-dire d'une part pour le remplissage de celui-ci avec du gaz comprimé et/ou d'autre part, inversement, pour le prélèvement de gaz comprimé dans l'accumulateur de pression, l'accumulateur de pression **(1)** étant partiellement rempli de liquide **(2)**, l'alimentation de l'accumulateur **(1)** avec une unité de gaz comprimé **(30)** s'accompagne du prélèvement d'une unité de liquide **(20)** de l'accumulateur **(1),** l'unité de liquide **(20)** prélevée étant utilisée pour déplacer l'unité de gaz comprimé **(30)** dans l'accumulateur au moyen d'un dispositif de déplacement **(6)** constitué d'au moins un mécanisme de déplacement **(61)** et d'au moins un récipient de déplacement **(60)**, ou inversement, le prélèvement d'une unité de gaz comprimé **(30)** dans l'accumulateur de pression **(1)** s'accompagne du chargement de l'accumulateur de pression **(1)** avec une unité de liquide **(20)**, l'unité de liquide **(20)** étant utilisée pour prélever l'unité de gaz comprimé **(30)** dans l'accumulateur de pression **(1)** au moyen du dispositif de déplacement **(6)**, le déplacement du gaz comprimé **(30)** dans ou hors de l'accumulateur de pression **(1)** s'effectuant à faible puissance si nécessaire, c'est-à-dire qu'aucune différence de hauteur n'est nécessaire entre l'accumulateur de pression **(1)** et le dispositif de déplacement **(6)**, qu'aucun coussin de gaz hermétiquement enfermé n'est nécessaire dans l'accumulateur de pression **(1)** et que, pour le déplacement de l'unité de liquide **(20)**, seule est nécessaire la maîtrise d'une différence de pression provoquée par des pertes de friction et d'écoulement ainsi que d'une différence de pression provoquée par une différence de hauteur éventuellement présente.

2. Procédé de gestion d'un système d'accumulateur de pression selon la revendication 1, dans lequel on utilise en outre une machine de travail **(4)** pour comprimer du gaz **(3)** en utilisant de l'énergie mécanique ou, inversement, pour détendre du gaz comprimé **(3)** en délivrant de l'énergie mécanique qui est mise à disposition ou prélevée par un entraînement ou une sortie **(8)** et cette machine de travail étant reliée fluidiquement à une source/un puits de gaz **(5)**, *caractérisé en ce que* le dispositif de déplacement **(6)** établit en cas de besoin, côté gaz, une liaison fluidique **(11, 12)** avec la machine de travail **(4)** et/ou l'accumulateur de pression **(1)**, et **en ce que**, côté liquide, une liaison fluidique **(13, 14)** vers l'accumulateur de pression **(1)** et/ou le bassin de réception **(7)** par l'ouverture de soupapes correspondantes **(64, 65)**, afin de permettre le déplacement de liquide **(2)** entre le dispositif de déplacement **(6)** et l'accumulateur de pression **(1)** ou le bassin de réception **(7)** et afin de permettre dans le même temps le déplacement de gaz **(3)** entre le dispositif de déplacement **(6)** et l'accumulateur de pression **(1)** ou la machine de travail **(4)**.

3. Procédé de gestion d'un système d'accumulation de pression selon l'une des revendications précédentes, dans lequel le dispositif de déplacement **(6)** est exploité, entre autres, avec plusieurs réservoirs de déplacement **(60a, b, c)** séparés et/ou combinés, qui sont reliés entre eux mécaniquement ou fluidiquement et sont disposés en parallèle et/ou en série.

4. Procédé de gestion d'un système d'accumulateur de pression selon l'une des revendications précédentes, dans lequel le dispositif de déplacement **(6)** est utilisé pour comprimer du gaz ou pour détendre du gaz en déplaçant au choix du liquide entre le dispositif de déplacement **(6)** et l'accumulateur de pression **(1)**, le bassin collecteur **(7)** ou à l'intérieur du dispositif de déplacement **(6)** lui-même, c'est-à-dire entre des récipients de déplacement **(60a, b, c)**.

5. Procédé de gestion d'un système d'accumulateur de pression selon l'une des revendications précédentes, dans lequel le liquide qui se trouve à l'intérieur du dispositif de déplacement **(6)**, de l'accumulateur de pression **(1)** ou du bassin de réception **(7)** est utilisé comme milieu de transfert de chaleur et/ou milieu d'accumulation de chaleur, afin d'apporter ou d'évacuer de la chaleur au gaz avant, pendant et/ou après la compression ou la détente du gaz, de préférence à l'intérieur d'un récipient de déplacement **(60a, b, c)**.

6. Procédé de gestion d'un système de stockage sous pression selon l'une quelconque des revendications précédentes, dans lequel l'échange de chaleur entre le gaz et le liquide à l'intérieur des réservoirs de déplacement **(60a, b, c)** est augmenté au moyen d'un régénérateur **(69)** afin de céder de la chaleur du gaz au liquide ou de céder de la chaleur du liquide au gaz.

7. Procédé de gestion d'un système d'accumulation de pression selon l'une des revendications précédentes, dans lequel l'accumulateur de pression **(1)** est constitué d'au moins deux réservoirs de pression séparés **(101, 102)** et le liquide **(2)** est déplacé dans un deuxième réservoir de pression **(102)** pendant le chargement du premier réservoir de pression **(101)** avec du gaz comprimé **(3)**, qui est chargé en gaz comprimé après le chargement du premier accumulateur de pression **(101)**, et le liquide (2) n'est déplacé dans le bassin de collecte **(7)** que pendant le chargement du dernier accumulateur de pression, la procédure étant la même lors du prélèvement de gaz comprimé **(3)** de l'accumulateur de pression **(1)**, en ce que les différents accumulateurs de pression **(101, 102)** sont vidés l'un après l'autre.

8. Dispositif de gestion d'un système d'accumulateur de pression pour la mise en œuvre du procédé selon l'une des revendications 1 à 7, comprenant au moins un accumulateur de pression **(1)**, un bassin collecteur **(7)** rempli en partie d'un liquide et en partie d'un gaz, une machine de travail **(4)** pour la transformation du gaz comprimé en énergie mécanique et inversement, reliée à une source/un puits de gaz **(5)**, un dispositif de déplacement **(6)** étant présent, avec des liaisons fluidiques côté liquide **(13, 14)** vers l'accumulateur de pression **(1)** et le bassin collecteur **(7)** ainsi qu'avec des liaisons fluidiques côté gaz **(11, 12)** vers la machine de travail **(4)** et l'accumulateur de pression **(1)**, le dispositif de déplacement comprenant au moins un réservoir de déplacement **(60)** séparé ou combiné, ainsi que des soupapes pour fermer au choix une ou plusieurs des liaisons fluidiques **(11-14)** pour le gaz ou le liquide, aucune différence de hauteur n'étant nécessaire entre l'accumulateur de pression **(1)**, le dispositif de déplacement **(6)** et/ou le bassin collecteur **(7)**, et aucun coussin de gaz enfermé hermétiquement n'étant nécessaire dans l'accumulateur de pression **(1)**, et dans lequel, lors du déplacement de gaz comprimé dans ou hors de l'accumulateur de pression **(1)**, il n'est nécessaire, pour le déplacement de liquide, que de surmonter une différence de pression due à des pertes de friction et d'écoulement ainsi qu'une différence de pression due à une éventuelle différence de hauteur.

9. Dispositif pour gérer un système d'accumulateur de pression selon la revendication 8, **caractérisé en ce que** le système d'accumulateur de pression comprend au moins les composants suivants:

    • l'accumulateur de pression **(1)**, partiellement rempli de liquide **(2)** et de gaz comprimé **(3)**, ces deux fluides étant ouvertement contigus ou séparés l'un de l'autre par un dispositif de séparation approprié, à savoir au moyen d'une vessie, d'un piston ou d'une membrane, et un bassin collecteur **(7)**,
    • un dispositif de déplacement **(6)**, constitué d'au moins un récipient de déplacement **(60)** séparé ou combiné, les fluides qui s'y trouvent étant ouvertement adjacents l'un à l'autre ou séparés l'un de l'autre par un dispositif de séparation approprié sous la forme d'une vessie, d'un piston ou d'une membrane, et un mécanisme de déplacement **(61)** pour déplacer du liquide à l'intérieur du dispositif de déplacement **(6)**, c'est-à-dire entre des récipients de déplacement et/ou entre le dispositif de déplacement **(6)** et l'accumulateur de pression (1) ou le bassin de réception **(7)**,
    • une liaison fluidique **(13)** entre le dispositif de déplacement **(6)** et l'accumulateur de pression **(1)** pour déplacer, si nécessaire, du liquide à faible débit entre le dispositif de déplacement **(6)** et l'accumulateur de pression **(1)**,
    • une liaison fluidique **(14)** entre le dispositif de déplacement **(6)** et le bassin collecteur **(7)** pour déplacer, en cas de besoin, du liquide à faible débit entre le dispositif de déplacement **(6)** et le bassin collecteur **(7)**,
    • une liaison fluidique **(12)** entre le dispositif de déplacement **(6)** et l'accumulateur de pression **(1)** pour le déplacement à faible puissance, en cas de besoin, de gaz entre le dispositif de déplacement **(6)** et l'accumulateur de pression **(1)**,
    • une liaison fluidique **(11)** entre le dispositif de déplacement **(6)** et la machine de travail **(4)** et/ou la source/le puits de gaz **(5)** pour, si nécessaire, déplacer le gaz à faible puissance entre le dispositif de déplacement **(6)** et la machine de travail **(4)** et/ou la source/le puits de gaz **(5)**,
    • des vannes contrôlables pour définir les directions d'écoulement du liquide et du gaz en fonctionnement,

• une machine de travail **(4)**, pour comprimer et/ou détendre le gaz,

• une commande d'entrée/sortie **(8)** pour convertir l'énergie d'une forme d'énergie quelconque en énergie mécanique afin d'entraîner la machine de travail **(4)** et, si nécessaire, le mécanisme de déplacement **(61)** ou vice versa, apte à recevoir l'énergie mécanique de la machine de travail **(4)** et, si nécessaire, du mécanisme de déplacement **(61)** et à la convertir et à la fournir sous une forme d'énergie quelconque.

10. Dispositif de gestion d'un système d'accumulation de pression selon l'une des revendications 8 ou 9, **caractérisé en ce que** le dispositif de déplacement **(6)** est intégré ou combiné à la machine de travail **(4)** ou la remplace ou constitue un ou plusieurs étages de celle-ci.

11. Dispositif de gestion d'un système d'accumulation de pression selon l'une des revendications 8 à 10, **caractérisé en ce que** le mécanisme de déplacement **(61)** possède un entraînement/une sortie séparée ou est couplé à l'entraînement/la sortie **(8)** de la machine de travail **(4)** et est constitué d'un piston ou d'une pompe.

Fig. 1

Fig. 2

Fig. 2a

Fig. 2b

Fig. 2c

Fig. 2d

Fig. 2e

Fig. 2f

Fig. 2g

Fig. 2h

Fig. 2i

Fig. 2j

Fig. 2k

Fig. 2l

Fig. 2m

Fig. 2n

Fig. 2o

Fig. 2p

Fig. 2q

Fig. 2r

Fig. 2s

Fig. 2t

Fig. 2u

Fig. 2v

Fig. 2w

Fig. 2x

Fig. 2y

Fig. 2z

Fig. 3a

EP 3 794 238 B1

Fig. 3b

36

Fig. 3c

Fig. 4

Fig. 5

Fig. 6

Fig. 6a

Fig. 6b

Fig. 6c

Fig. 6d

Fig. 6e

Fig. 6f

Fig. 6g

Fig. 6h

Fig. 6i

Fig. 6j

Fig. 6k

Fig. 6l

Fig. 6m

Fig. 6n

Fig. 6o

Fig. 6p

Fig. 6q

Fig. 6r

Fig. 6s

Fig. 6t

Fig. 6u

Fig. 6v

Fig. 6w

Fig. 6x

Fig. 6y

Fig. 7

Fig. 7a

Fig. 7b

Fig. 7c

Fig. 7d

Fig. 7e

Fig. 7f

Fig. 7g

Fig. 7h

Fig. 7i

Fig. 7j

Fig. 7k

Fig. 7l

Fig. 7m

Fig. 7n

Fig. 8

EP 3 794 238 B1

Fig. 9

75

Fig. 10

Fig. 11

**IN DER BESCHREIBUNG AUFGEFÜHRTE DOKUMENTE**

**In der Beschreibung aufgeführte Patentdokumente**

- US 4392354 A
- US 9109512 B2
- US 8801332 B2
- WO 1993006367 A1
- WO 2012160311 A2
- WO 2008023901 A1
- US 7663255 B2